# EUROPEAN PATENT SPECIFICATION

(11) **EP 4 293 631 B1**
(45) Date of publication and mention of the grant of the patent: **07.10.2026**
(21) Application number: 22855072.9
(22) Date of filing: 20.06.2022
(51) Int. Cl.: G06V 10/762, G06V 10/44, G06V 10/764, G06V 10/772, G06V 10/774, G06V 20/69, G06F 16/55

(54) **METHOD AND APPARATUS FOR IMAGE CLUSTERING, COMPUTER DEVICE, AND STORAGE MEDIUM**
VERFAHREN UND VORRICHTUNG ZUR BILDGRUPPIERUNG, COMPUTERVORRICHTUNG UND SPEICHERMEDIUM
PROCÉDÉ ET APPAREIL DE GROUPEMENT D'IMAGES, DISPOSITIF INFORMATIQUE ET SUPPORT DE STOCKAGE

(30) Priority: 09.08.2021 CN 202110907973
(43) Date of publication of application: 20.12.2023
(73) Proprietor: Tencent Technology (Shenzhen) Company Limited, Shenzhen, Guangdong 518057 (CN)
(72) Inventor: YAN, Jiangpeng, Shenzhen, Guangdong 518057 (CN); YAO, Jianhua, Shenzhen, Guangdong 518057 (CN)
(74) Representative: Nederlandsch Octrooibureau
(86) International application number: PCT/CN2022/099660
(87) International publication number: WO 2023/016087

(56) References cited:
- WO-A1-2021/029835
- CN-A- 107 943 984
- CN-A- 108 268 526
- CN-A- 109 447 186
- CN-A- 110 796 164
- CN-A- 114 283 299
- JP-A- 2012 048 641
- RODRIGUES NAIALLEN CAROLYNE: "BISECTING STOCHASTIC CLUSTERING: A NEW ALGORITHM FOR POLSAR IMAGE UNSUPERVISED CLASSIFICATION", 10 November 2020 (2020-11-10), pages 1 - 209, XP093190847, Retrieved from the Internet <URL:http://mtc-m21c.sid.inpe.br/col/sid.inpe.br/mtc-m21c/2020/12.28.13.44/doc/publicacao.pdf> [retrieved on 20240726]
- SAVARESI SERGIO M ET AL: "Choosing the Cluster to Split in Bisecting Divisive Clustering Algorithms", COMPUTER SCIENCE & ENGINEERING (CS&E) TECHNICAL REPORTS, 26 October 2000 (2000-10-26), University Digital Conservancy, pages 1 - 16, XP093190843, Retrieved from the Internet <URL:https://hdl.handle.net/11299/215443> [retrieved on 20240726]
- VAN DEN BERGH ET AL: "Deciding on the Starting Number of Classes of a Latent Class Tree", vol. 48, no. 1, 21 June 2018 (2018-06-21), pages 303 - 336, XP093190431, ISSN: 0081-1750, Retrieved from the Internet <URL:http://journals.sagepub.com/doi/full-xml/10.1177/0081175018780170> [retrieved on 20240726], DOI: 10.1177/0081175018780170
- CHEN LI-FEI: "A Hierarchical Method for Determining the Number of Clusters", JOURNAL OF SOFTWARE, vol. 19, no. 1, 30 June 2008 (2008-06-30), pages 62 - 72, XP093035466, ISSN: 1000-9825, DOI: 10.3724/SP.J.1001.2008.00062
- HALKIDI M., VAZIRGIANNIS M.: "Clustering validity assessment: finding the optimal partitioning of a data set", DATA MINING, 2001. ICDM 2001, PROCEEDINGS IEEE INTERNATIONAL CONFERENC E ON SAN JOSE, CA, USA 29 NOV.-2 DEC. 2001, LOS ALAMITOS, CA, USA,IEEE COMPUT. SOC, US, 29 November 2001 (2001-11-29) - 2 December 2001 (2001-12-02), US , pages 187 - 194, XP010583276, ISBN: 978-0-7695-1119-1, DOI: 10.1109/ICDM.2001.989517

## Description

This application claims priority to Chinese Patent Application No. 2021109079733, titled "IMAGE CLUSTERING METHOD AND APPARATUS, COMPUTER DEVICE, AND STORAGE MEDIUM" filed with the China National Intellectual Property Administration on August 09, 2021.

### FIELD

Embodiments of the present disclosure relate to the technical field of artificial intelligence, and in particular to image clustering technology.

### BACKGROUND

With the continuous development of computer technology, there is an increasing demand for image processing. Image clustering is a commonly used image processing method, and image clustering is used to classify multiple images into different classes. In related technologies, a target number of classes are usually predetermined, and then multiple images are classified into these classes by using a clustering algorithm. At present, the clustering degree achieved after performing image clustering using the clustering algorithm is not high enough.

Rodrigues Naiallen Carolyne: "BISECTING STOCHASTIC CLUSTERING: A NEW ALGORITHM FOR POLSAR IMAGE UNSUPERVISED CLASSIFICATION", 10 November 2020 (2020-11-10), pages 1-209, XP093190847, uses the partitional clustering scalability and the hierarchical clustering flexibility, allied to the statistical knowledge about the data, in order to provide an accurate classification result.

### SUMMARY

According to embodiments of the present disclosure, an image clustering method and apparatus, a computer device, and a storage medium are provided, so as to improve a clustering degree of image clustering. The technical solutions are as follows.

According to one aspect, an image clustering method is provided. The method is executed by a computer device, and the method includes:
determining a first clustering parameter based on M image groups, the first clustering parameter representing a clustering degree of images in the M image groups, and M being an integer greater than 1;
for any target image group in the M image groups, dividing the target image group into two image groups to obtain M+1 reference image groups, and determining a reference clustering parameter determined based on the M+1 reference image groups as a second clustering parameter for the target image group, the second clustering parameter representing a clustering degree of images in the M+1 reference image groups; and
dividing, in a case that a clustering degree represented by a target second clustering parameter is not lower than the clustering degree represented by the first clustering parameter, a target image group corresponding to the target second clustering parameter into two image groups to obtain M+1 image groups, the target second clustering parameter being the second clustering parameter representing the highest clustering degree among respective second clustering parameters of the M image groups.

According to another aspect, an image clustering apparatus is provided. The apparatus includes: a first parameter determining module, a second parameter determining module and an image group dividing module.

The first parameter determining module is configured to determine a first clustering parameter based on M image groups, the first clustering parameter representing a clustering degree of images in the M image groups, and M being an integer greater than 1.

The second parameter determining module is configured to, for any target image group in the M image groups, divide the target image group into two image groups to obtain M+1 reference image groups, and determine a reference clustering parameter determined based on the M+1 reference image groups as a second clustering parameter for the target image group. The second clustering parameter represents a clustering degree of images in the M+1 reference image groups.

The image group dividing module is configured to divide, in a case that a clustering degree represented by a target second clustering parameter is not lower than the clustering degree represented by the first clustering parameter, a target image group corresponding to the target second clustering parameter into two image groups to obtain M+1 image groups. The target second clustering parameter is the second clustering parameter representing the highest clustering degree among respective second clustering parameters of the M image groups.

According to another aspect, a computer device is provided. The computer device includes a processor and a memory. The memory stores at least one computer program, and the at least one computer program is loaded and executed by the processor to implement operations of the image clustering method described in the above aspect.

According to another aspect, a computer-readable storage medium is provided. At least one computer program is stored in the computer-readable storage medium, and the at least one computer program is loaded and executed by a processor to implement operations of the image clustering method described in the above aspect.

According to another aspect, a computer program product or a computer program is provided. The computer program product or the computer program includes computer program code, and the computer program code is stored in a computer-readable storage medium. A processor of a computer device reads the computer program code from the computer-readable storage medium, and the processor executes the computer program code, such that the computer device implements operations of the image clustering method as described in the above aspect.

According to the method and apparatus, the computer device, and the storage medium provided in the embodiments of the present disclosure, a second clustering parameter obtained after each image group in M image groups is divided into two new image groups is determined. In a case that a clustering degree represented by a target second clustering parameter (the second clustering parameter representing the highest clustering degree among respective second clustering parameters of the M image groups) is not lower than a clustering degree represented by a first clustering parameter before the dividing, it is indicated that dividing an image group corresponding to the target second clustering parameter into two new image groups can improve the clustering degree of images in the image group. Therefore, the image group is divided into two new image groups to obtain M+1 image groups, thereby achieving subdivision of the M image groups, facilitating distinguishing confusable images, and thus improving the clustering degree of image clustering.

### BRIEF DESCRIPTION OF THE DRAWINGS

FIG. 1 is a schematic diagram of an implementation environment according to an embodiment of the present disclosure.
FIG. 2 is a flowchart of an image clustering method according to an embodiment of the present disclosure.
FIG. 3 is a schematic diagram of an image classification model according to an embodiment of the present disclosure.
FIG. 4 is a schematic diagram of another image classification model according to an embodiment of the present disclosure.
FIG. 5 is a flowchart of an image clustering method according to an embodiment of the present disclosure.
FIG. 6 is a schematic diagram of a first feature extraction network according to an embodiment of the present disclosure.
FIG. 7 is a flowchart of determining a clustering parameter according to an embodiment of the present disclosure.
FIG. 8 is a flowchart of a model training method according to an embodiment of the present disclosure.
FIG. 9 is a schematic diagram of training an image classification model according to an embodiment of the present disclosure.
FIG. 10 is a flowchart of another image clustering method according to an embodiment of the present disclosure
FIG. 11 is a schematic structural diagram of an image clustering apparatus according to an embodiment of the present disclosure.
FIG. 12 is a schematic structural diagram of another image clustering apparatus according to an embodiment of the present disclosure.
FIG. 13 is a schematic structural diagram of a terminal according to an embodiment of the present disclosure.
FIG. 14 is a schematic structural diagram of a server according to an embodiment of the present disclosure.

### DETAILED DESCRIPTION OF EMBODIMENTS

To illustrate objectives, technical solutions, and advantages of embodiments of the present disclosure clearer, embodiments of the present disclosure are described in detail with reference to the accompanying drawings hereinafter.

An image clustering method provided in the embodiments of the present disclosure relates to computer vision technology in artificial intelligence technology, and the image clustering method provided in the embodiments of the present disclosure is described below.

The image clustering method provided in the embodiments of this application is executable by a computer device. In an embodiment, the computer device may be a terminal or a server. The server may be an independent physical server, or a server cluster or a distributed system formed by multiple physical servers, or a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform. The terminal may be a smartphone, a tablet computer, a notebook computer, a desktop computer, a smart speaker, a smartwatch, etc., but is not limited thereto.

In an implementation, a computer program involved in the embodiments of the present disclosure may be deployed on a single computer device for executing, or deployed on multiple computer devices at one location for executing, or deployed on multiple computer devices distributed at multiple locations and interconnected through a communication network for executing. The multiple computer devices distributed at multiple locations and interconnected through a communication network can form a blockchain system.

In an implementation, a computer device in the embodiments of the present disclosure is a node in a blockchain system, the node can store multiple image groups obtained by clustering in the blockchain, and then the node or other nodes in the blockchain can obtain the multiple image groups from the blockchain.

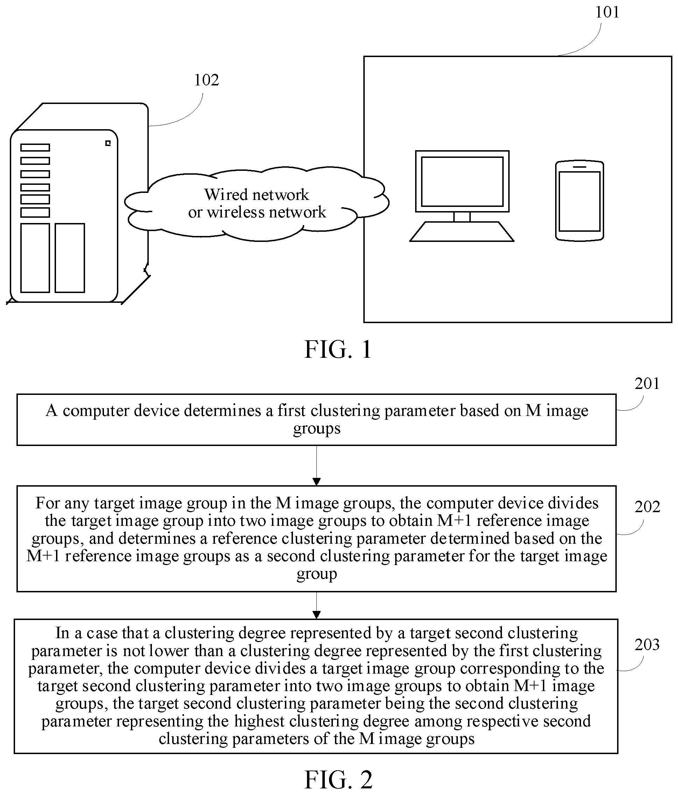

FIG. 1 is a schematic diagram of an implementation environment according to an embodiment of the present disclosure. The implementation environment includes a terminal 101 and a server 102. The terminal 101 and the server 102 are connected through a wireless or wired network.

In an implementation, the terminal 101 sends multiple images to the server 102, the server 102 may perform image clustering on the multiple received images by using the method provided in the embodiment of the present disclosure, to obtain multiple image groups. Then the server 102 returns the multiple image groups to the terminal 101.

In another implementation, a target application for a service provided by the server 102 is installed on the terminal 101, and the terminal 101 may implement functions such as image processing or image transmission through the target application. For example, the target application is an image processing application, and the image processing application can perform image clustering on multiple images. The server 101 is configured to train an image classification model and deploy a trained image classification model into the target application. When running the target application, the terminal 101 can call the image classification model to classify multiple images to obtain multiple image groups. Then, by using the method provided in the embodiment of the present disclosure, the multiple image groups are clustered to obtain multiple image groups having a higher clustering degree.

FIG. 2 is a flowchart of an image clustering method according to an embodiment of the present disclosure. An execution subject of the embodiment of the present disclosure is a computer device. In an example, the computer device may be the terminal or the server in the above embodiment corresponding to FIG. 1. Referring to FIG. 2, the method includes the following steps 201 to 203.

In step 201, the computer device determines a first clustering parameter based on M image groups.

The computer device obtains M image groups, where M is an integer greater than 1, and each image group includes at least one image. The similarity between images belonging to a same image group is high, and the similarity between images belonging to different image groups is low, and each image group can be regarded as a cluster.

The computer device determines the first clustering parameter based on the M image groups, where the first clustering parameter represents a clustering degree of images in the M image groups. In general, a great first clustering parameter represents a high clustering degree between images, and a small first clustering parameter represents a low clustering degree between images. The clustering degree reflects an aggregation degree between images in a same image group, and a separation degree between images in different image groups. If the aggregation degree between images in a same image group is high and the separation degree between images in different image groups is high, the clustering degree between the images in the M image groups is high.

In step 202, for any target image group in the M image groups, the computer device divides the target image group into two image groups to obtain M+1 reference image groups, and determines a reference clustering parameter determined based on the M+1 reference image groups as a second clustering parameter for the target image group.

Each image group in the M image groups can be regarded as a target image group. For any target image group in the M image groups, the computer device divides the target image group into two image groups and uses the two image groups and M-1 image groups in the M image groups other than the target image group as reference image groups, to obtain M+1 reference image groups. The computer device determines a reference clustering parameter based on the M+1 reference image groups, and determines the reference clustering parameter as a second clustering parameter for the target image group. The second clustering parameter represents a clustering degree of images in the M+1 reference image groups.

The computer device performs the operation in step 202 on each image group in the M image groups, to obtain the second clustering parameter for each image group in the M image groups, that is, M second clustering parameters are obtained.

In step 203, in a case that a clustering degree represented by a target second clustering parameter is not lower than the clustering degree represented by the first clustering parameter, the computer device divides a target image group corresponding to the target second clustering parameter into two image groups to obtain M+1 image groups. The target second clustering parameter is the second clustering parameter representing the highest clustering degree among respective second clustering parameters of the M image groups.

Since the second clustering parameter represents the clustering degree of the images in the M+1 reference image groups, the computer device can determine the second clustering parameter representing the highest clustering degree among the obtained second clustering parameters of the M image groups as the target second clustering parameter. Accordingly, after the target image group corresponding to the target second clustering parameter is divided into two image groups, the obtained clustering degree of the images of the M+1 reference image groups is the highest. That is, in a case that there is a need to divide one image group in the M image groups into two image groups, the target image group corresponding to the target second clustering parameter is divided into two image groups, such that the clustering degree of the images is the highest. This dividing mode is the best dividing mode.

It is to be understood that, in a case that a great clustering parameter represents a high clustering degree, the target second clustering parameter is the greatest second clustering parameter among respective second clustering parameters of the M image groups; and in a case that a small clustering parameter represents a high clustering degree, the target second clustering parameter is the smallest second clustering parameter among respective second clustering parameters of the M image groups.

The computer device compares the clustering degree represented by the target second clustering parameter with the clustering degree represented by the first clustering parameter. In a case that the clustering degree represented by the target second clustering parameter is not lower than the clustering degree represented by the first clustering parameter, the clustering degree of images is not lower than the clustering degree of the images of the original M image groups after the target image group corresponding to the target second clustering parameter is divided into two image groups. Therefore, the computer device divides the target image group corresponding to the target second clustering parameter into two image groups to obtain M+1 image groups. In another embodiment, in a case that the clustering degree represented by the target second clustering parameter is lower than the clustering degree represented by the first clustering parameter, the clustering degree of images is lower than the clustering degree of the images of the original M image groups after the target image group corresponding to the target second clustering parameter is divided into two image groups. Therefore, the computer device no longer divides any image group in the M image groups.

According to the method provided in the embodiment of the present disclosure, a second clustering parameter obtained after each image group in M image groups is divided into two new image groups is determined. In a case that a clustering degree represented by a target second clustering parameter is not lower than a clustering degree represented by a first clustering parameter before the dividing, it is indicated that dividing an image group corresponding to the target second clustering parameter into two new image groups can improve the clustering degree of images in the image group. Therefore, the image group is divided into two new image groups to obtain M+1 image groups, thereby achieving subdivision of the M image groups, facilitating distinguishing confusable images, and thus improving the clustering degree of image clustering.

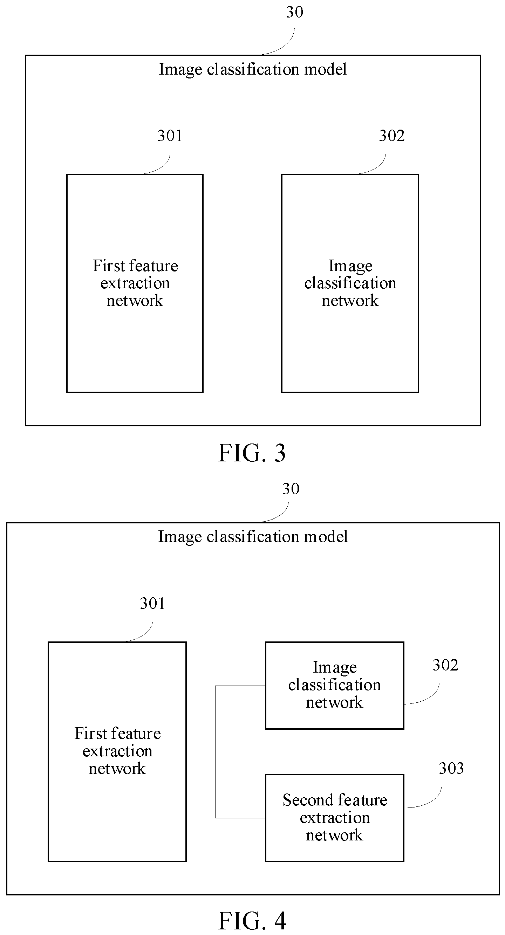

In some embodiments, M image groups are obtained according to a classification result of an image classification model for multiple images, and the image classification model is configured to classify the images to obtain class labels of the images. FIG. 3 is a schematic diagram of an image classification model according to an embodiment of the present disclosure. As shown in FIG. 3, an image classification model 30 includes a first feature extraction network 301 and an image classification network 302. The first feature extraction network 301 is connected to the image classification network 302, the first feature extraction network 301 is configured to perform feature extraction on images, and the image classification network 302 is configured to perform classification based on image features.

In an implementation, as shown in FIG. 4, the image classification model 30 further includes a second feature extraction network 303. The second feature extraction network 303 is connected to the first feature extraction network 301, and the second feature extraction network 303 is configured to perform feature extraction on the image features extracted by the first feature extraction network 301.

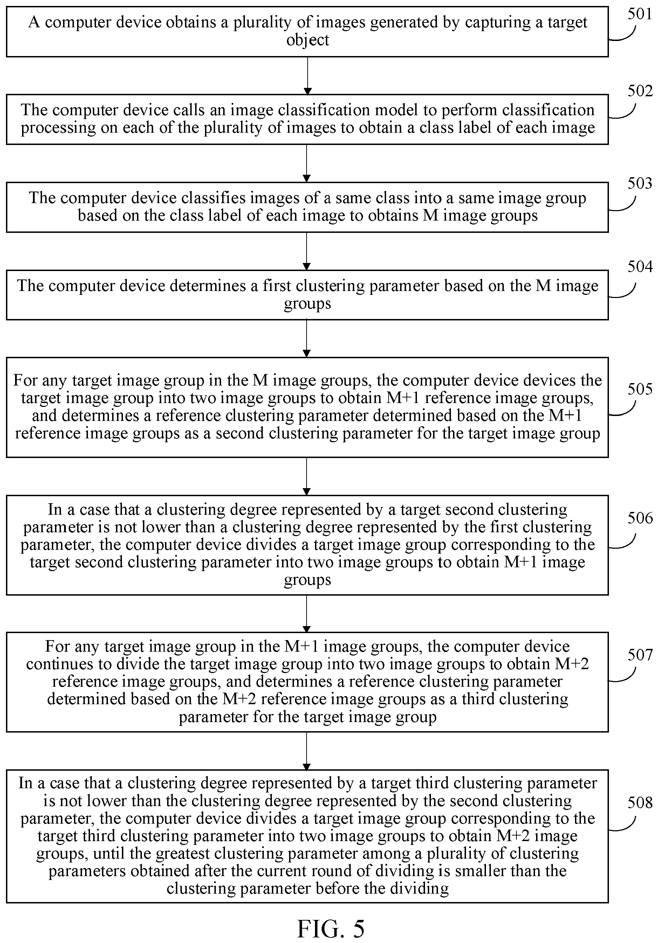

FIG. 5 is a flowchart of an image clustering method according to an embodiment of the present disclosure. An execution subject of the embodiment of the present disclosure is a computer device. In an example, the computer device may be the terminal or the server in the above embodiment corresponding to FIG. 1. Referring to FIG. 5, the method includes the following steps 501 to 508.

In step 501, the computer device obtains multiple images generated by capturing a target object.

The computer device obtains multiple images, where the multiple images are generated by capturing a same target object. For example, the target object is a human body, and the multiple images may be obtained by capturing different organs of the same human body; or the target object is an organ, and the multiple images may be obtained by capturing different parts of the same organ; or the target object is a scenario, and the multiple images may be obtained by capturing the same scenario at different time points. In the medical field, the multiple images may be digital pathology whole slide images (WSIs), the digital pathology WSIs are images obtained by scanning a pathology microscope slide through a digital pathology imaging instrument, and the digital pathology imaging instrument includes an optical systems, a linear scanning camera, and other components.

In step 502, the computer device calls an image classification model to classify the multiple images to obtain a class label of each image.

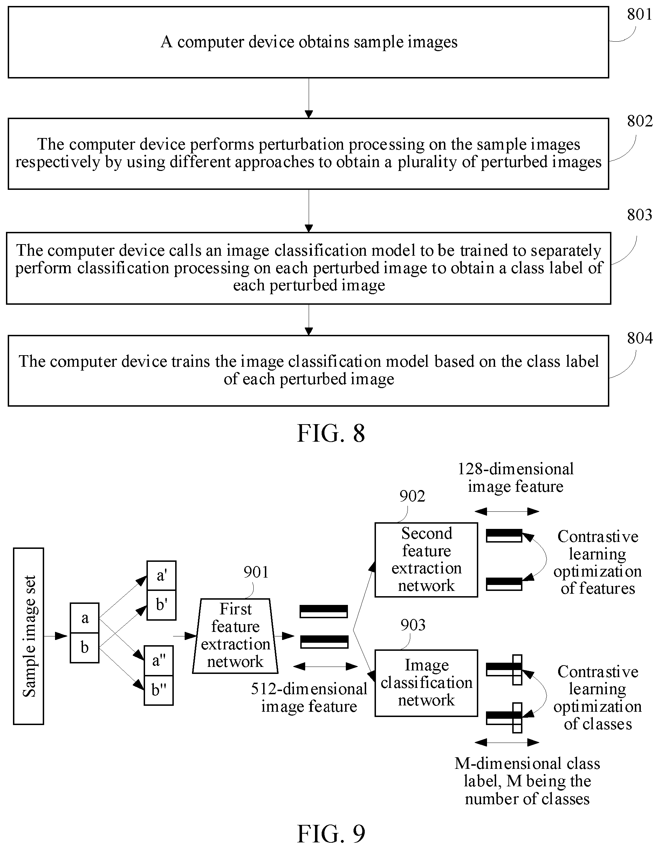

The image classification model is stored in the computer device, and the image classification model is configured to classify images. In an example, the image classification model may be a Convolutional Neural Network (CNN). One may refer to the above embodiment corresponding to FIG. 3 for the network structure of the image classification model. One may refer to the following embodiment corresponding to FIG. 8 for a training process of the image classification model, and details are not described here. After obtaining the multiple images, the computer device calls the image classification model to classify each image in the multiple images to obtain the class label of each image. The class label of an image can represent the class to which the image belongs.

In an implementation, as shown in FIG. 3, the image classification model includes the first feature extraction network and the image classification network, and the first feature extraction network is connected to the image classification network. For each image in the multiple images, the computer device calls the first feature extraction network to perform feature extraction on the image to obtain a first image feature, and calls the image classification network to perform classification processing based on the first image feature to obtain the class label of the image.

An image is inputted to the first feature extraction network, and an input of the image classification network is an output of the first feature extraction network. In an example, the image classification network is a neural network including two fully-connected layers. The first image feature outputted by the first feature extraction network is used for representing the feature of the image, for example, the first image feature is a multi-dimensional feature vector matrix, or the first image feature is an image used for representing a feature.

In another implementation, the images are pathology slide images, the first feature extraction network includes K feature extraction layers and a feature conversion layer. The feature extraction layers are configured to extract image features, and the feature conversion layer is configured to convert the image features. The computer device calls the K feature extraction layers to perform feature extraction on the images in sequence to obtain the image feature outputted by each feature extraction layer; and calls the feature conversion layer to perform feature conversion on the image features outputted by last L feature extraction layers to obtain the first image feature, L being an integer greater than 1 and not greater than K. In the first feature extraction network, the K feature extraction layers are sequentially connected, and the feature conversion layer is connected to the last L feature extraction layers.

In an arrangement order from front to back, the K feature extraction layers extract the image features from a shallow layer to a deep layer in sequence. Classification of the pathology slide images depends more on morphological information and texture information of a distribution of nuclei in the images, and the information needs to be obtained from the image features extracted from a shallow layer network. In consideration of this, during feature conversion, feature conversion is performed on the image features outputted by the last L feature extraction layers, instead of only on the image feature outputted by the last feature extraction layer, such that the finally obtained first image feature not only includes the image feature of the deep layer outputted by the last feature extraction layer, but also includes the image features of relative shallow layers outputted by the feature extraction layers before the last feature extraction layer, thereby improving the feature extraction capability of the first feature extraction network for the pathology slide images.

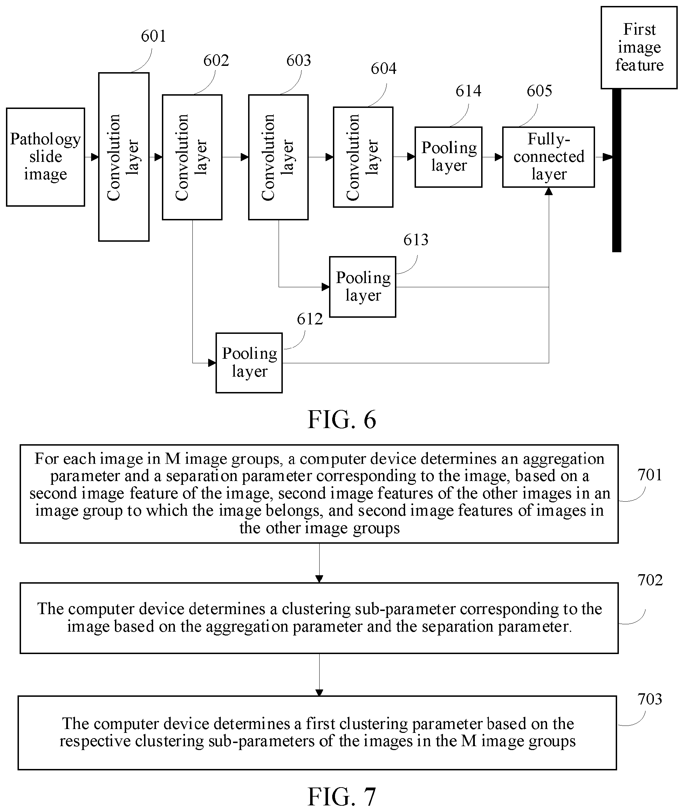

In an example, the feature extraction layers in the first feature extraction network are convolution layers, the feature conversion layer is a fully-connected layer, a pooling layer is connected between the last L feature extraction layers and the feature conversion layer. The pooling layer is configured to perform pooling processing on the image features extracted by the feature extraction layers. As shown in FIG. 6, the first feature extraction network includes a convolution layer 601 to a convolution layer 604 and a fully-connected layer 605; pooling layers are respectively connected between each of the last three convolution layers (i.e., convolution layer 602 to convolution layer 604) and the fully-connected layer 605. The computer device inputs a pathology slide image into the convolution layer 601 of the first feature extraction network, the image feature outputted from the convolution layer 601 is inputted into the convolution layer 602, the image feature outputted from the convolution layer 602 is inputted into the convolution layer 603 and the pooling layer 612, the image feature outputted from the convolution layer 603 is inputted into the convolution layer 604 and the pooling layer 613, and the image feature outputted from the convolution layer 604 is inputted into the pooling layer 614. The image features respectively outputted by the pooling layer 612, the pooling layer 613, and the pooling layer 614 are inputted into the fully-connected layer 605. The fully-connected layer 605 performs feature conversion on the image features outputted by the three pooling layers to obtain the first image feature.

In an example, the convolution layer in the first feature extraction network may include a residual neural network, GoogleNet (a neural network), a Visual Geometry Group Network (VGGnet) or other network.

In step 503, the computer device classifies images of a same class into a same image group based on the class label of each image, to obtain M image groups.

After obtaining the class label of each image, the computer device can determine, based on the class label of the image, the class to which the image belongs. The computer device classifies images of a same class into a same image group to obtains M image groups, M being an integer greater than 1. Each image group includes at least one image; images belonging to a same image group have a same class, and the similarity between these images is high. Images belonging to different image groups have different classes, and the similarity between these images is low. In steps 501-503, image clustering is performed on the multiple obtained images to obtain multiple image groups, where each image group may be one cluster.

In an example, the class label of an image includes a probability that the image belongs to each class. For each image, the class corresponding to the maximum probability in the class label of the image is determined as the class to which the image belongs.

In steps 501-503, the computer device first determines, through the image classification model, the class to which each image belongs, and then classifies the multiple images into M image groups according to the class to which each image belongs. The number of classes that can be determined by the image classification model is fixed, for example, if the class labels outputted by the image classification model include probabilities for K classes, M is not greater than K, resulting in that the number of the multiple image groups obtained by clustering the multiple images is limited. In this case, there may be a situation where the aggregation degree between images within a same image group is not high enough, resulting in that the clustering degree of images in the M image groups is not high enough. Therefore, the computer device needs to execute the following steps 504-508 to further divide the M image groups.

In step 504, the computer device determines a first clustering parameter based on the M image groups.

The computer device determines the first clustering parameter based on the M image groups. The first clustering parameter represents a clustering degree of images in the M image groups. In general, a great first clustering parameter represents a high clustering degree between images, and a small first clustering parameter represents a low clustering degree between images. The clustering degree reflects an aggregation degree between images in a same image group, and a separation degree between images in different image groups. If the aggregation degree between images in a same image group is high and the separation degree between images in different image groups is high, the clustering degree between the images in the M image groups is high.

In an implementation, the computer device determines the first clustering parameter based on the first image feature of the images in each of the M image groups. As shown in FIG. 7, the process of determining the first clustering parameter includes the following steps 701 to 703.

In step 701, for each image in the M image groups, the computer device determines an aggregation parameter and a separation parameter corresponding to the image, based on the first image feature of the image, first image features of other images in an image group to which the image belongs, and first image features of images in other image groups. The aggregation parameter represents a dissimilarity degree between the image and other images in the image group to which the image belongs, and the separation parameter represents a dissimilarity degree between the image and images in the other image groups.

The computer device determines the aggregation parameter corresponding to the image, based on the first image feature of the image, and the first image features of the other images in the image group to which the image belongs. The computer device determines the separation parameter corresponding to the image, based on the first image feature of the image, and the first image features of the images in the image groups other than the image group to which the image belongs.

For example, for each of the other image groups, the computer device can determine a candidate separation parameter between the image and each of the other image groups based on the first image feature of the image, and the first image features of the images in each of the other image groups. Accordingly, the minimum candidate separation parameter between the image and the other image groups is determined, as the separation parameter corresponding to the image.

For example, the computer device can determine a distance between the image and each of the other images based on the first image feature of the image and the first image features of the other images in the image group to which the image belongs, and then determine a mean value of the distances between the image and the other images as the aggregation parameter corresponding to the image. If the distance between the image and the other images is small, the similarity between the image and the other images in the same image group is high, and the aggregation parameter corresponding to the image is small. Therefore, a small aggregation parameter corresponding to an image represents a low dissimilarity degree between the image and the other images in an image group to which the image belongs, and represents a high clustering degree of the image group.

For example, for each of the other image groups, the computer device can determine the distance between the image and each image in the other image group based on the first image feature of the image and the first image feature of each image in the other image group, and then determine a mean value of the distances between the image and multiple images in the other image group as a candidate separation parameter between the image and the other image group. Accordingly, among the candidate separation parameters between the image and the other image groups, the minimum candidate separation parameter is determined as the separation parameter corresponding to the image. If the distance between the image and the images in the other image groups is great, the similarity between the image and the images in the other image groups is low, and the separation parameter corresponding to the image is great. Therefore, a great separation parameter corresponding to an image represents a high dissimilarity degree between the image and the images in the other image groups, and represents a high clustering degree of the image group. The distance between images may be a cosine distance, a Euclidean distance or the like, and a type of the distance is not limited in the embodiment of the present disclosure.

In step 702, the computer device determines a clustering sub-parameter corresponding to the image based on the aggregation parameter and the separation parameter. The clustering sub-parameter is negatively correlated with the aggregation parameter, and the clustering sub-parameter is positively correlated with the separation parameter.

If the aggregation parameter is great, the clustering sub-parameter corresponding to the image is small; and if the aggregation parameter is small, the clustering sub-parameter corresponding to the image is great. If the separation parameter is great, the clustering sub-parameter corresponding to the image is great; and if the separation parameter is small, the clustering sub-parameter corresponding to the image is small. A great clustering sub-parameter corresponding to the image represents a high clustering degree of the image.

In an embodiment, the computer device determines the clustering sub-parameter corresponding to an image by using the following formula:
$SC \left(i\right) = \frac{b \left(i\right) - a \left(i\right)}{max \left(a\left(i\right),b\left(i\right)\right)} ;$
where i represents the image, SC(i) represents the clustering sub-parameter corresponding to the image, a(i) represents the aggregation parameter corresponding to the image, and b(i) represents the separation parameter corresponding to the image.

In step 703, the computer device determines the first clustering parameter based on respective clustering sub-parameters of the images in the M image groups.

The computer device determines the clustering sub-parameter corresponding to each image, and determines the first clustering parameter based on the respective clustering sub-parameters of the images. In an embodiment, the computer device determines the mean value of the respective clustering sub-parameters of the images as the first clustering parameter.

In an embodiment, the closer the first clustering parameter is to 1, the smaller the distance between multiple images in a same image group is, the greater the distance between multiple images in different image groups is, and the higher the clustering degree of images in the M image groups is. The closer the first clustering parameter is to -1, the greater the distance between multiple images in a same image group is, the smaller the distance between multiple images in different image groups is, and the smaller the clustering degree of images in the M image groups is.

In step 505, for any target image group in the M image groups, the computer device divides the target image group into two image groups to obtain M+1 reference image groups, and determines a reference clustering parameter determined based on the M+1 reference image groups as a second clustering parameter for the target image group.

Each image group in the M image groups may serve as a target image group. For any target image group in the M image groups, the computer device divides the target image group into two image groups, and determines the reference clustering parameter determined based on the M+1 reference image groups as the second clustering parameter for the target image group. The second clustering parameter represents a clustering degree of images in the M+1 reference image groups. The computer device performs the operation in step 202 for each image group in the M image groups, to obtain the second clustering parameter for each image group in the M image groups, that is, M second clustering parameters can be obtained.

For example, M is 3, and the M image groups include an image group 1, an image group 2, and an image group 3. The computer device divides the image group 1 into an image group 11 and an image group 12, and determines a second clustering parameter a based on the image group 11, the image group 12, the image group 2, and the image group 3. The computer device divides the image group 2 into an image group 21 and an image group 22, and determines a second clustering parameter b based on the image group 1, the image group 21, the image group 22, and the image group 3. The computer device divides the image group 3 into an image group 31 and an image group 32, and determines a second clustering parameter c based on the image group 1, the image group 2, the image group 31, and the image group 32. As a result, three second clustering parameters are obtained, including the second clustering parameter a of the image group 1, the second clustering parameter b of the image group 2, and the second clustering parameter c of the image group 3.

In an embodiment, the computer device divides the target image group into two new image groups by using any clustering algorithm such as a spectral clustering algorithm, a k-means algorithm (an unsupervised clustering algorithm), or a maximization expectation clustering algorithm based on a Gaussian Mixed Model (GMM).

In step 506, in a case that a clustering degree represented by a target second clustering parameter is not lower than a clustering degree represented by the first clustering parameter, the computer device divides a target image group corresponding to the target second clustering parameter into two image groups to obtain M+1 image groups. The target second clustering parameter is the second clustering parameter representing the highest clustering degree among respective second clustering parameters of the M image groups.

Since the second clustering parameters represent the clustering degrees of images in the M+1 reference image groups, the computer device can determine the target second clustering parameter representing the highest clustering degree among the obtained second clustering parameters of the M image groups. After the target image group corresponding to the target second clustering parameter is divided into two image groups, the obtained clustering degree of the images of the M+1 reference image groups is the highest. The computer device compares the clustering degree represented by the target second clustering parameter with the clustering degree represented by the first clustering parameter. In a case that the clustering degree represented by the target second clustering parameter is not lower than the clustering degree represented by the first clustering parameter, the clustering degree of images is not lower than the clustering degree of the images of the original M image groups after the target image group corresponding to the target second clustering parameter is divided into two image groups. As a result, the computer device divides the target image group corresponding to the target second clustering parameter into two image groups to obtain M+1 image groups.

In another embodiment, in a case that the clustering degree represented by the target second clustering parameter is lower than the clustering degree represented by the first clustering parameter, the clustering degree of images is lower than the clustering degree of the images of the original M image groups after the target image group corresponding to the target second clustering parameter is divided into two image groups. As a result, the computer device no longer divides any image group in the M image groups, and the following steps 507 and 508 are unnecessary to be performed.

In step 507, for any target image group in the M+1 image groups, the computer device continues to divide the target image group into two image groups to obtain M+2 reference image groups, and determines a reference clustering parameter determined based on the M+2 reference image groups as a third clustering parameter for the target image group.

After obtaining the M+1 image groups, for any target image group in the M+1 image groups, the computer device continues to divide the target image group into two image groups to obtain M+2 reference image groups, and determines a reference clustering parameter determined based on the M+2 reference image groups as a third clustering parameter for the target image group. The third clustering parameter represents a clustering degree of the M+2 reference image groups. The computer device performs the operation in step 507 for each image group in the M+1 image groups, to obtain the third clustering parameter for each image group in the M+1 image groups, that is, M+1 third clustering parameters are obtained.

The process of determining the third clustering parameter in step 507 is similar to the process of determining the second clustering parameter in step 505 above, and details are not repeated here.

In step 508. in a case that a clustering degree represented by a target third clustering parameter is not lower than the clustering degree represented by the target second clustering parameter, the computer device divides a target image group corresponding to the target third clustering parameter into two image groups to obtain M+2 image groups, until the greatest clustering parameter among multiple clustering parameters obtained after the current round of dividing is smaller than the clustering parameter before the dividing.

The process of obtaining M+2 image groups by the computer device in step 508 is similar to the process of obtaining the M+1 image groups in step 506 above, and details are not repeated here.

After obtaining the M+2 image groups, the computer device continues to divide any target image group in the M+2 image groups, re-determines the clustering parameter, and then determines, depending on the value of the clustering parameter, whether to continue to divide the M+2 image groups into M+3 image groups. That is, the computer device executes multiple iteration processes. Steps 505 and 506 and steps 507 and 508 each represent one iteration process. In the current round of iteration process, in a case that among multiple clustering parameters obtained after the current round of dividing, a clustering degree represented by a target clustering parameter (i.e., the clustering parameter obtained after the current round of dividing and representing the highest clustering degree) is lower than a clustering degree represented by a target clustering parameter before dividing (i.e., the clustering parameter obtained after the previous round of dividing and representing the highest clustering degree), it is indicated that the clustering degree obtained after dividing any of image groups is lower than the clustering degree before dividing. Therefore, the computer device stops the iteration process, and dividing of the M image groups is completed.

For example, the original M image groups are *C =* {*c*ᵢ*}, cᵢ* ∈ [0, 1, *...,M* - 1]; in each round of iteration process, multiple image groups before dividing are defined as *Cₚᵣₑᵥ*; multiple image groups after dividing are defined as *C_{cur}*; the number of the multiple image groups after dividing is defined as K; the clustering parameters corresponding to *Cₚᵣₑᵥ* are defined as *SCₚᵣₑᵥ*; the clustering parameters corresponding to *C_{cur}* are defined as *SC_{cur}.* The parameters are initialized as: *Cₚᵣₑᵥ = C_{cur} =* C and *K = M,* the following iteration process is executed until an iteration termination condition is satisfied.
(1) for the current M image groups, ${SC}_{cur}^{i}$, i ∈ [1, 2, ..., M] obtained by dividing each image group into two image groups is separately determined, the maximum value is determined among M ${SC}_{cur}^{i}$, and the maximum value is indicated as ${SC}_{cur}^{\overline{i}}$. The image group i̅ is divided into two image groups, and the obtained M+1 image groups are indicated as new C_{cur} = {*c*ᵢ*},* cᵢ ∈ [0,1, ..., M].
(2) In a case that ${SC}_{cur}^{\overline{i}} \geq {SC}_{prev}$, it is indicated that dividing the image group i̅ into 2 image groups can improve the clustering degree of images. Then the computer device divides the image group i̅ into two image groups, updates *Cₚᵣₑᵥ* = C_{cur} , K = M + 1, and executes the next round of iteration process. In a case that ${SC}_{cur}^{\overline{i}} < {SC}_{prev}$, the iteration process is terminated, and the finally obtained C_{cur} = {*c*ᵢ*},* cᵢ ∈ [0,1, ... , M] serves as a result of image clustering.

The embodiment of the present disclosure includes two processes. One is image clustering based on an image classification model, where multiple images without class labels are processed by using an end-to-end image classification model to obtain a class label for each image, thereby achieving preliminary image clustering; and the other is image clustering based on clustering parameters. Based on clustering parameters, multiple current image groups are further divided to select image groups distributed more tightly; and when a clustering degree represented by each clustering parameter after the dividing is lower than a clustering degree represented by each clustering parameter before the dividing, dividing of the image groups is terminated and a final clustering result is obtained.

According to the method provided in the embodiment of the present disclosure, a second clustering parameter obtained after each image group in M image groups is divided into two new image groups is determined. In a case that a clustering degree represented by a target second clustering parameter (the second clustering parameter representing the highest clustering degree) is not lower than a clustering degree represented by a first clustering parameter before the dividing, it is indicated that dividing an image group corresponding to the target second clustering parameter into two new image groups can improve the clustering degree of images in the image group. Therefore, the image group is divided into two new image groups to obtain M+1 image groups, thereby achieving subdivision of the M image groups, facilitating distinguishing confusable images, and then improving the clustering degree of image clustering.

Moreover, an image classification model is first called to determine class labels of multiple images, and the multiple images are classified into M image groups based on the class labels to achieve preliminary image clustering of the multiple images. Then, the M image groups are further divided based on clustering parameters to achieve more accurate image clustering of the multiple images. The combination of the two approaches improves both the efficiency of image clustering and the clustering degree of image clustering.

Furthermore, feature conversion is performed on image features outputted by the last L feature extraction layers, such that the finally obtained first image feature not only includes the image feature of a deep layer outputted by the last feature extraction layer but also includes image features of relative shallow layers outputted by the feature extraction layers before the last feature extraction layer, thereby improving the feature extraction capability of a first feature extraction network for pathology slide images.

FIG. 8 is a flowchart of a model training method according to an embodiment of the present disclosure. An image classification model trained in the embodiment of the present disclosure may be applied to the above embodiment shown in FIG. 5. An execution subject of the method is a computer device. In an example, the computer device may be the terminal or the server in the above embodiment corresponding to FIG. 1. Referring to FIG. 8, the method includes the following steps 801 to 804.

In step 801, the computer device obtains sample images.

The sample images may be any type of images, and may be sample images obtained using any method. For example, the computer device obtains multiple pathology slide images of different organs of different human bodies, splits each pathology slide image into multiple image blocks of a same size, and uses multiple obtained image blocks as the sample images.

The sample images in the embodiment of the present disclosure are images without real class labels, and the training method in the embodiment of the present disclosure is a training method for unsupervised learning based on unlabeled sample images.

In step 802, the computer device performs perturbation processing on the sample images by using different approaches to obtain multiple perturbed images.

The computer device performs perturbation processing to enhance randomness of the sample images. The computer device performs perturbation processing on the sample images by using different approaches to obtain multiple different perturbed images.

Different perturbation processing approaches may correspond to different perturbation types, and the perturbation types include color dithering, Gaussian blur, rotation, cropping a partial area and then zooming to an original size, etc. Each perturbation processing may include only one perturbation type, or include multiple perturbation types. In an embodiment, when perturbation processing is performed on the sample image, multiple perturbation types are traversed. For the currently traversed perturbation type, the computer device determines, according to a probability of occurrence of the perturbation type, whether the perturbation type is selected this time; if yes, performs perturbation processing according to the perturbation type and continues to traverse the next perturbation type; and if not, does not perform perturbation processing according to the perturbation type and directly traverses the next perturbation type until the last perturbation type is traversed. In this way, the sample image is subjected to one perturbation processing by using a combination of multiple perturbation types, to obtain a perturbed image. Then, according to the above steps, the computer device continues to perform another perturbation processing on the sample image to obtain another perturbed image. In an embodiment, the probability of occurrence of each perturbation type is set to 0.5 to enhance the randomness of the perturbed image.

Taking respectively performing two perturbation processes on two sample images as an example. The computer device selects multiple perturbation types according to the probability of occurrence of each perturbation approach, and respectively performs perturbation processing on the two sample images according to the perturbation types selected this time to obtain two perturbed images; and then the computer device selects multiple perturbation types according to the probability of occurrence of each perturbation approach again, and respectively performs perturbation processing on the two sample images according to the perturbation types selected this time to obtain two perturbed images again. As a result, the computer device finally obtains four perturbed images.

In step 803, the computer device calls an image classification model to be trained to perform classification processing on each perturbed image to obtain a class label of the perturbed image.

In an implementation, the image classification model includes a first feature extraction network and an image classification network. For each perturbed image, the computer device calls the first feature extraction network to perform feature extraction on the perturbed image to obtain a second image feature, and calls the image classification network to perform classification processing based on the second image feature to obtain the class labels of the perturbed image. The class label is a pseudo label predicted by the image classification model, rather than a true class label of the perturbed image.

In another possible implementation, as shown in FIG. 4, the image classification model further includes a second feature extraction network. After obtaining the second image feature, the computer device further calls the second feature extraction network to perform feature extraction on the second image feature to obtain a third image feature.

The second feature extraction network is connected to the first feature extraction network. The first feature extraction network and the second feature extraction network are both configured to extract image features, and the difference lies in that the first feature extraction network extracts features of images, and the second feature extraction network extracts features of image features. Compared with the first image feature extracted by the first feature extraction network, the second image feature extracted by the second feature extraction network is a deeper-level feature. The third image features in the embodiment of the present disclosure may be used for training the image classification model. For the process of training the image classification model by using the third image features, one may refer to step 804 below, and details are not described here.

The process of obtaining the second image features and the class labels of the perturbed images in step 803 is similar to the process of obtaining the first image features and the class labels of the images in step 502 above, and details are not repeated here.

In step 804, the computer device trains the image classification model based on the class label of each perturbed image.

After obtaining the class label of each perturbed image, the computer device trains the image classification model based on the class label of each perturbed image, to improve the classification capability of the image classification model. The trained image classification model can perform classification processing on any given image to obtain the class label of the image. In an embodiment, the class label includes a probability that the image belongs to each class. The class corresponding to the maximum probability in the class label is the class to which the image belongs.

In an implementation, the number of sample images is more than one, and the class label of each perturbed image includes the probability that the perturbed image belongs to each class. The computer device obtains multiple perturbed images obtained by performing perturbation processing on a same sample image, and determines a first difference parameter between probabilities that the multiple perturbed images obtained belong to a same class; obtains multiple perturbed images obtained by performing perturbation processing on different sample images, and determines a second difference parameter between probabilities that the multiple perturbed images obtained belong to a same class; and trains an image classification model based on the first difference parameter and the second difference parameter, such that the first difference parameter obtained by calling the trained image classification model decreases, and the second difference parameter obtained by calling the trained image classification model increases.

For multiple perturbed images obtained by preforming perturbation processing on a same sample image, since the multiple perturbed images are derived from the same sample image, the class to which the multiple perturbed images belong should be the same as the class to which the sample image belongs, that is, the classes to which the multiple perturbed images belong are also the same. The class labels of the perturbed images are predicted by the image classification model. In a case that the accuracy of the image classification model is high enough, the probabilities that the multiple perturbed images belong to the same class are close enough. Therefore, the computer device determines the first difference parameter between the probabilities that the multiple perturbed images belongs to a same class. The smaller the first difference parameter is, the closer the probabilities that the multiple perturbed images belong to a same class is, and thus the more accurate the image classification model is. Therefore, the computer device trains the image classification model based on the first difference parameter, such that the first difference parameter decreases, thereby improving the classification capability of the image classification model.

For multiple perturbed images obtained by preforming perturbation processing on different sample images, since the multiple perturbed images are derived from different sample images, the classes to which the multiple perturbed images belong are respectively the same as the classes to which the sample images belong, that is, the classes to which the multiple perturbed images belong are different. The class labels of the perturbed images are predicted by the image classification model. In a case that the accuracy of the image classification model is high enough, the difference between the probabilities that the multiple perturbed images belong to the same class is great enough. Therefore, the computer device determines a second difference parameter between the probabilities that the multiple perturbed images belongs to a same class. The greater the second difference parameter is, the greater the difference between the probabilities that the multiple perturbed images belong to a same class is, and thus the more accurate the image classification model is. Therefore, the computer device trains the image classification model based on the second difference parameter, such that the second difference parameter increases, thereby improving the classification capability of the image classification model.

In another implementation, the image classification model further includes a second feature extraction network. In step 803 above, after obtaining the second image feature, the computer device further calls the second feature extraction network to perform feature extraction on the second image feature to obtain a third image feature. Then, the computer device further trains the image classification model based on the third image feature of each perturbed image.

In an embodiment, the number of sample images is more than one. The process of training the image classification model based on the third image feature of each perturbed image includes: obtaining multiple perturbed images generated by performing perturbation processing on a same sample image, and determining a third difference parameter between obtained third image features of the multiple disturbed images by the computer device; obtaining multiple perturbed images generated by performing perturbation processing on different sample images, and determining a fourth difference parameter between obtained third image features of the multiple perturbed images by the computer device; and training the image classification model based on the third difference parameter and the fourth difference parameter by the computer device, such that the third difference parameter obtained by calling the trained image classification model decreases, and the fourth difference parameter obtained by calling the trained image classification model increases.

For multiple perturbed images obtained by preforming perturbation processing on a same sample image, since the multiple perturbed images are derived from the same sample image, the image features of the multiple perturbed images are similar to the image features of the sample image, that is, the image features of the multiple perturbed images are also similar. In a case that the accuracy of the image classification model is high enough, the image features of different perturbed image extracted by the image classification model are close enough. Therefore, the computer device determines the third difference parameter between the third image features of the multiple perturbed images. The smaller the third difference parameter is, the closer the third image features of the multiple perturbed images is, and thus the more accurate the image classification model is. Therefore, the computer device trains the image classification model based on the third difference parameter, such that the third difference parameter decreases, thereby improving the classification capability of the image classification model.

For multiple perturbed images obtained by preforming perturbation processing on different sample images, since the multiple perturbed images are derived from different sample images, the image features of the multiple perturbed images are respectively similar to the image features of the different sample images, that is, the image features of the multiple perturbed images are not similar. In a case that the accuracy of the image classification model is high enough, the difference in the image features of different perturbed images extracted by the image classification model is great enough. Therefore, the computer device determines the fourth difference parameter between the third image features of the multiple perturbed images. The greater the fourth difference parameter is, the greater the difference between the third image features of the multiple perturbed images is, and thus the more accurate the image classification model is. Therefore, the computer device trains the image classification model based on the fourth difference parameter, such that the fourth difference parameter increases, thereby improving the classification capability of the image classification model.

In an embodiment, the computer device determines a first loss value based on the first difference parameter and the second difference parameter, determines a second loss value based on the third difference parameter and the fourth difference parameter, and calculates a weighted sum of the first loss value and the second loss value to obtain a target loss value. The computer device trains the image classification model based on the target loss value, such that a target loss value obtained by calling the trained image classification model decreases.

The first loss value is positively correlated with the first difference parameter, and the first loss value is negatively correlated with the second difference parameter. That is, the greater the first difference parameter is, the greater the first loss value is; the smaller the first difference parameter is, the smaller the first loss value is; the greater the second difference parameter is, the smaller the first loss value is; and the smaller the second difference parameter is, the greater the first loss value is. The second loss value is positively correlated with the third difference parameter, and the third loss value is negatively correlated with the fourth difference parameter. That is, the greater the third difference parameter is, the greater the second loss value is; the smaller the third difference parameter is, the smaller the second loss value is; the greater the fourth difference parameter is, the smaller the second loss value is; and the smaller the fourth difference parameter is, the greater the second loss value is. In an embodiment, respective weight coefficients of the first loss value and the second loss value are 0.5.

In the embodiment of the present disclosure, the feature extraction capability of the image classification model and the capability to distinguish images of different classes of the image classification model are improved by performing comparative learning based on perturbed images from the same sample image and performing comparative learning based on perturbed images from different sample images. Comparative learning is adopted to perform unsupervised training on the image classification model, without manual labeling of sample images, such that labor and time are saved, wrong lables caused by manual labeling can be avoided, thereby improving the training efficiency and accuracy of the image classification model are improved.

In an implementation, since the process of training the image classification model in the embodiment of the present disclosure is unsupervised training, there is no real sample class label during the training process, and thus the image classification model can only determine the probability that an image belongs to each class but cannot determine the real meaning of each class. In an embodiment, the computer device is unnecessary to determine the real meaning of each class, and only needs to classify multiple images into different classes in the subsequent process by using the image classification model. In an embodiment, after classifying multiple images into different classes by using the image classification model, the computer device manually determines the real meaning of each class based on the classification result. For example, in the medical field, the image classification model can classify pathology slide images into seven classes, where each class represents a physiological tissue type; and then a doctor determines, according to the classification result, the physiological tissue type represented by each class.

Steps 801-804 above are exemplified in only one iteration process. In the process of training an image processing model, iterative training needs to be performed multiple times. In an implementation, the computer device stops training the image classification model in response to the number of iteration rounds reaching a first threshold; or, stops training the image classification model in response to a loss value obtained in the current iteration round being not greater than a second threshold. Both the first threshold and the second threshold may be set according to actual needs, for example, the first threshold is 10 or 15, and the second threshold is 0.01 or 0.02.

In the embodiment of the present disclosure, training of the image classification model includes the following contents.
(1) data to be prepared: an unlabeled sample image set, the total number E of iterations of model training, the number N of sample images processed in each iteration, a randomness enhancement strategy, weight coefficients *τ_{I}*, and *τ_{C}* of loss values, the number M of classes, and an image classification model, where the image classification model includes a first feature extraction network *f_{ω}*, a second feature extraction network *ip_{ω̂}*, and an image classification network *cp_{ω̅}*, where *ω*, *ω̂*, *ω̅* are network parameters. The total number E of iterations and the number N of sample images are both integers, for example, E is greater than 100, and N is greater than 128.
(2) Network structure: the first feature extraction network *f_{ω}* is a neural network, 224*224*3-dimensional sample images are inputted to the first feature extraction network, and the first feature extraction network outputs 512*1-dimensional image features. The second feature extraction network *ip_{ω̂}*, and the image classification network *cp_{ω̅}* project the image features outputted by the first feature extraction network *f_{ω}* into different spaces, so as to perform comparative learning optimization on the features and perform comparative learning optimization on the classes, respectively. The 512*1-dimensional image features are inputted to the second feature extraction network *ip_{ω̂}*, and the second feature extraction network *ip_{ω̂}*, outputs 128*1-dimensional image features. The 512*1-dimensional image features are inputted to the image classification network *cp_{ω̅}*, and the image classification network *cp_{ω̅}* outputs M*1-dimensional class labels. The second feature extraction network *ip_{ω̂}*, is a neural network composed of two fully-connected layers, the input is 512*1-dimensional, a middle layer is 512*1-dimensional, and the output is 128*1-dimensional. The image classification network *cp_{ω̅}* is a neural network composed of two fully-connected layers, the input is 512*1-dimensional, the middle layer is 512*1-dimensional, and the output is M*1-dimensional.
(3) Training process: FIG. 9 is a schematic diagram of training an image classification model according to an embodiment of the present disclosure. As shown in FIG. 9, in an iterative training process, sample image a and sample image b are obtained from a sample image set, and perturbed image a', perturbed image b', perturbed image a" and perturbed image b" are obtained by performing perturbation processing on sample image a and sample image b using different manners. The first feature extraction network 901 is called to perform feature extraction on each perturbed image to obtain a 512-dimensional image feature of the perturbed image, the second feature extraction network 902 is called to perform feature extraction on the 512-dimensional image feature to obtain a 128-dimensional image feature, and the image classification network 903 is called to perform classification processing on the 512-dimensional image feature to obtain an M-dimensional class label. The computer device performs comparative learning optimization on the feature dimension based on the image features outputted by the second feature extraction network 902, and performs comparative learning optimization on the class dimension based on the class labels outputted by the image classification network 903.

In the method provided in the embodiment of the present disclosure, the feature extraction capability of the image classification model and the capability to distinguish images of different classes of the image classification model are improved by performing comparative learning based on perturbed images from the same sample image and by performing comparative learning based on perturbed images from different sample images. Comparative learning is adopted to perform unsupervised training on the image classification model, without manual labeling of sample images, such that labor and time are saved, and wrong labels caused by manual labeling can be avoided, thereby improving the training efficiency and accuracy of the image classification model.

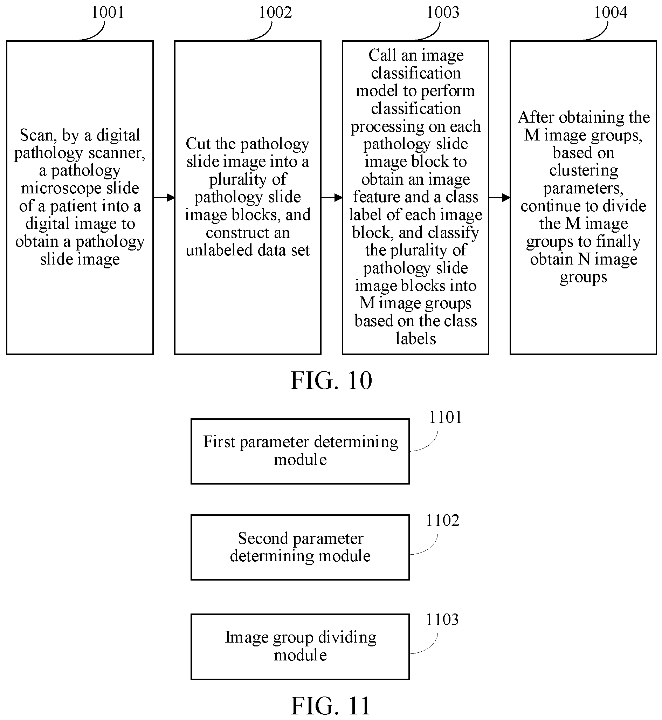

The above embodiment can be applied to any scenario where image clustering is needed, to perform image clustering on any class of images. For example, in the medical field, image clustering is performed on multiple pathology slide images of a patient according to the physiological tissue type. FIG. 10 is a flowchart of an image clustering method according to an embodiment of the present disclosure. Referring to FIG. 10, the method includes the following steps 1001 to 1004.

In step 1001. by a digital pathology scanner, a pathology microscope slide of a patient is scanned into a digital image to obtain a pathology slide image.

In step 1002, the pathology slide image is splitted into multiple pathology slide image blocks, an unlabeled data set is constructed.

In step 1003, an image classification model is called to perform classification processing on each pathology slide image block to obtain an image feature and a class label of each image block, and the multiple pathology slide image blocks are classified into M image groups based on the class labels.

In step 1004, after the M image groups is obtained, the M image groups is divided based on clustering parameters, to finally obtain N image groups.

In the embodiment of the present disclosure, image clustering can be performed on the unlabeled pathology slide image blocks, the multiple pathology slide image blocks are classified into multiple image groups, and each image group represents one type of physiological tissue, thereby providing support for a subsequent pathological analysis task. For example, the pathological analysis task includes: performing abnormality prediction or prognosis processing based on the proportion of the amount of physiological tissue; and determining, by comparing an image group for a certain tissue with an image group for normal tissue, whether the tissue is abnormal, where each image group corresponds to one type of physiological tissue.

In addition to performing image clustering on pathology slide images according to the type of physiological tissue, image clustering may also be performed on pathology slide images according to other criteria. For example, image clustering is performed on pathology slide images according to the quality class, where the quality type, for example, includes uneven staining, slide thickness, knife vibration, slide wrinkle or the like. In another example, image clustering is performed on pathology slide images according to the cell type, where the cell type, for example, includes suspicious cells, normal cells or the like.

FIG. 11 is a schematic structural diagram of an image clustering apparatus according to an embodiment of the present disclosure. Referring to FIG. 11, the apparatus includes: a first parameter determining module 1101, a second parameter determining module 1102 and an image group dividing module 1103.

The first parameter determining module 1101 is configured to determine a first clustering parameter based on M image groups. The first clustering parameter represents a clustering degree of images in the M image groups, and M is an integer greater than 1.

The second parameter determining module 1102 is configured to, for any target image group in the M image groups, divide the target image group into two image groups to obtain M+1 reference image groups, and determine a reference clustering parameter determined based on the M+1 reference image groups as a second clustering parameter for the target image group. The second clustering parameter represents a clustering degree of images in the M+1 reference image groups.

The image group dividing module 1103 is configured to divide, in a case that a clustering degree represented by a target second clustering parameter is not lower than the clustering degree represented by the first clustering parameter, a target image group corresponding to the target second clustering parameter into two image groups to obtain M+1 image groups. The target second clustering parameter is the second clustering parameter representing the highest clustering degree among respective second clustering parameters of the M image groups.

According to the image clustering apparatus provided in the embodiment of the present disclosure, a second clustering parameter obtained after each image group in M image groups is divided into two new image groups is separately determined. In a case that a clustering degree represented by a target second clustering parameter is not lower than a clustering degree represented by a first clustering parameter before the dividing, it is indicated that dividing an image group corresponding to the target second clustering parameter into two new image groups can improve the clustering degree of images in the image group. Therefore, the image group is divided into two new image groups to obtain M+1 image groups, thereby achieving subdivision of the M image groups, facilitating distinguishing confusable images, and thus improving the clustering degree of image clustering.

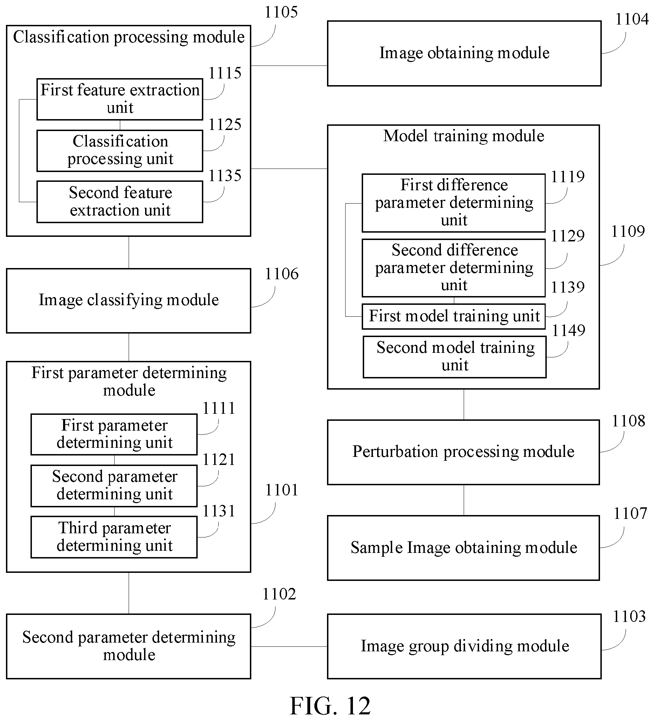

In an embodiment, referring to FIG. 12, the second parameter determining module 1102 is further configured to:

for any target image group in the M+1 image groups, divide the target image group into two image groups to obtain M+2 reference image groups, and determine a reference clustering parameter determined based on the M+2 reference image groups as a third clustering parameter for the target image group. The third clustering parameter represents a clustering degree of images in the M+2 reference image groups.

The image group dividing module 1103 is further configured to divide, in a case that a clustering degree represented by a target third clustering parameter is not lower than the clustering degree represented by the target second clustering parameter, a target image group corresponding to the target third clustering parameter into two image groups to obtain M+2 image groups, the target third clustering parameter being the third clustering parameter representing the highest clustering degree among respective third clustering parameters of the M+1 image groups; and determine that image clustering processing for the image groups is completed, in a case that the clustering degree represented by the target third clustering parameter is lower than the clustering degree represented by the target second clustering parameter.

In an embodiment, referring to FIG. 12, the apparatus further includes: an image obtaining module 1104, a classification processing module 1105 and an image classifying module 1106.

The image obtaining module 1104 is configured to obtain multiple images generated by capturing a target object.

The classification processing module 1105 is configured to call an image classification model to separately classify the multiple images to obtain a class label of each image.

The image classifying module 1106 is configured to classify images of a same class into a same image group based on the respective class labels of the multiple images to obtain M image groups.

In an embodiment, referring to FIG. 12, the image classification model includes a first feature extraction network and an image classification network. The classification processing module 1105 includes: a first feature extraction unit 1115 and a classification processing unit 1125.

The first feature extraction unit 1115 is configured to call the first feature extraction network for each image in the multiple images, to perform feature extraction on the image to obtain a first image feature.

The classification processing unit 1125 is configured to call the image classification network to perform classification processing based on the first image feature to obtain a class label of the image.

In an embodiment, referring to FIG. 12, the first parameter determining module 1101 includes: a first parameter determining unit 1111, a second parameter determining unit 1121 and a third parameter determining unit 1131.

The first parameter determining unit 1111 is configured to, for each image in the M image groups, determine an aggregation parameter and a separation parameter corresponding to the image, based on the first image feature of the image, first image features of other images in an image group to which the image belongs, and first image features of images in other image groups. The aggregation parameter represents a degree of dissimilarity between the image and other images in the image group to which the image belongs, and the separation parameter represents a degree of dissimilarity between the image and the images in the other image groups.

The second parameter determining unit 1121 is configured to determine, based on the aggregation parameter and the separation parameter, a clustering sub-parameter corresponding to the image. The clustering sub-parameter is negatively correlated with the aggregation parameter, and is positively correlated with the separation parameter.

The third parameter determining unit 1131 is configured to determine the first clustering parameter based on the respective clustering sub-parameters of the images in the M image groups.

In an embodiment, referring to FIG. 12, the images are pathology slide images. The first feature extraction network includes K feature extraction layers and a feature conversion layer. The first feature extraction unit 1115 is configured to:
call the K feature extraction layers to sequentially perform feature extraction on the image to obtain an image feature outputted by each feature extraction layer; and
call the feature conversion layer to perform feature conversion on the image features outputted by last L feature extraction layers to obtain the first image feature, L being an integer greater than 1 and not greater than the K.

In an embodiment, referring to FIG. 12, the apparatus further includes: a sample image obtaining module 1107, a perturbation processing module 1108 and a model training module 1109.

The sample image obtaining module 1107 is configured to obtain sample images.

The perturbation processing module 1108 is configured to perform perturbation processing on the sample images respectively by using different approaches to obtain multiple perturbed images.

The classification processing module 1105 is further configured to call an image classification model to be trained to perform classification processing on each perturbed image to obtain a class label of the perturbed image.

The model training module 1109 is configured to train the image classification model based on the class label of each perturbed image.

In an embodiment, referring to FIG. 12, the number of sample images is more than one, and the class labels of the perturbed images include probabilities that the perturbed images belong to each class. The model training module 1109 includes: a first difference parameter determining unit 1119, a second difference parameter determining unit 1129 and a first model training unit 1139.

The first difference parameter determining unit 1119 is configured to obtain multiple perturbed images generated by performing perturbation processing on a same sample image, and determine a first difference parameter between probabilities that the multiple perturbed images obtained belong to a same class.

The second difference parameter determining unit 1129 is configured to obtain multiple perturbed images generated by performing perturbation processing on different sample images, and determine a second difference parameter between probabilities that the multiple perturbed images obtained belong to a same class.

The first model training unit 1139 is configured to train the image classification model based on the first difference parameter and the second difference parameter, such that the first difference parameter obtained by calling the trained image classification model decreases and the second difference parameter obtained by calling the trained image classification model increases.

In an embodiment, referring to FIG. 12, the image classification model includes a first feature extraction network and an image classification network. The classification processing module 1105 includes: the first feature extraction unit 1115 and the classification processing unit 1125.

The first feature extraction unit 1115 is configured to, for each perturbed image, call the first feature extraction network to perform feature extraction on the perturbed image to obtain a second image feature.

The classification processing unit 1125 is configured to call the image classification network to perform classification processing based on the second image feature to obtain a class label of the perturbed image.

In an embodiment, referring to FIG. 12, the image classification model further includes a second feature extraction network. The classification processing module 1105 further includes:
a second feature extraction unit 1135, configured to call the second feature extraction network to perform feature extraction on the second image feature to obtain a third image feature. and

The model training module 1109 further includes:
a second model training unit 1149, configured to train the image classification model based on the third image feature of each perturbed image.

In an embodiment, referring to FIG. 12, the number of sample images is more than one. The second model training unit 1149 is configured to:
obtain multiple perturbed images generated by performing perturbation processing on a same sample image, and determine a third difference parameter between the obtained third image features of the multiple disturbed images;
obtain multiple perturbed images generated by performing perturbation processing on different sample images, and determine a fourth difference parameter between the obtained third image features of the multiple perturbed images; and
train the image classification model based on the third difference parameter and the fourth difference parameter, such that the third difference parameter obtained by calling the trained image classification model decreases and the fourth difference parameter obtained by calling the trained image classification model increases.

When performing image clustering, the image clustering apparatus provided in the above embodiment is exemplified by division of the various functional modules above. In practical application, the functions above can be achieved by different functional modules according to requirements. That is, a computer device is divided into different functional modules, so as to complete all or some of the functions described above. In addition, the image clustering apparatus provided in the above embodiment and the image clustering method embodiments share a same concept. For a specific implementation process, one may refer to the method embodiments, and details are not described herein again.

A computer device is further provided according to an embodiment of the present disclosure. The computer device includes a processor and a memory, the memory stores at least one computer program, and the at least one computer program is loaded and executed by the processor to implement the operations of the image clustering method in the above embodiments.

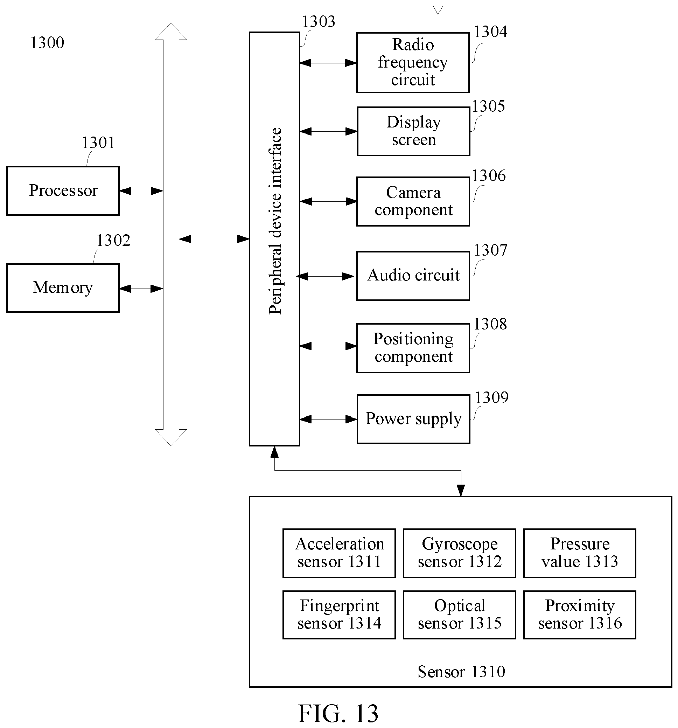

In an embodiment, the computer device is implemented as a terminal. FIG. 13 shows a schematic structural diagram of a terminal 1300 according to an exemplary embodiment of the present disclosure.

The terminal 1300 includes: a processor 1301 and a memory 1302.

The processor 1301 may include one or more processing cores, for example, a 4-core processor or an 8-core processor. The processor 1301 may be implemented in at least one hardware form of Digital Signal Processing (DSP), a Field Programmable Gate Array (FPGA), and a Programmable Logic Array (PLA). The processor 1301 may also include a master processor and a slave processor. The master processor is a processor configured to process data in an awake state, and is also referred to as a Central Processing Unit (CPU). The slave processor is a low-power-consumption processor configured to process data in a standby state. In some embodiments, the processor 1301 may be integrated with a Graphics Processing Unit (GPU), and the GPU is configured to render and draw content that needs to be displayed on a display screen. In some embodiments, the processor 1301 may further include an artificial intelligence (AI) processor, and the AI processor is configured to process computing operations related to machine learning.

The memory 1302 may include one or more computer-readable storage media, and the computer-readable storage medium may be non-transient. The memory 1302 may further include a high-speed random access memory and a nonvolatile memory, for example, one or more disk storage devices or flash storage devices. In some embodiments, the non-transitory computer-readable storage medium in the memory 1302 is configured to store at least one computer program, and the at least one computer program is executed by the processor 1301 to implement the image clustering method provided in the method embodiments of the present disclosure.

In some embodiments, the terminal 1300 may further include: a peripheral device interface 1303 and at least one peripheral device. The processor 1301, the memory 1302, and the peripheral interface 1303 may be connected through a bus or a signal wire. Each peripheral device may be connected to the peripheral device interface 1303 through a bus, a signal wire, or a circuit board. In an embodiment, the peripheral device includes: at least one of a radio frequency circuit 1304, a display screen 1305, a camera component 1306, an audio circuit 1307, a positioning component 1308, and a power supply 1309.

In some embodiments, the terminal 1300 further includes one or more sensors 1310. The one or more sensors 1310 include, but are not limited to: an acceleration sensor 1311, a gyroscope sensor 1312, a pressure sensor 1313, a fingerprint sensor 1314, an optical sensor 1315, and a proximity sensor 1316.

A person skilled in the art may understand that the structure shown in FIG. 13 constitutes no limitation to the terminal 1300, and the terminal may include more or fewer components than those shown in the figure, or some components may be combined, or the components may be arranged in different manners.

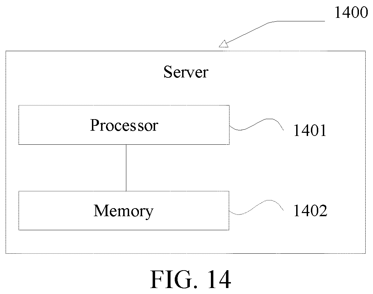

In an embodiment, the computer device may be provided as a server. FIG. 14 is a schematic structural diagram of a server according to an embodiment of the present disclosure. The server 1400 may vary a lot due to different configurations or performance, and may include one or more Central Processing Units (CPUs) 1401 and one or more memories 1402. The memory 1402 stores at least one computer program, and the at least one computer program is loaded and executed by the CPU 1401 to implement the method provided in the above method embodiments. Certainly, the server may further include components such as a wired or wireless network interface, a keyboard, and an input/output interface, to conveniently perform input and output. The server may further include other components configured to implement device functions. Details are not described herein again.

A computer-readable storage medium is further provided according to an embodiment of the present disclosure. The computer-readable storage medium stores at least one computer program, and the at least one computer program is loaded and executed by a processor to implement the operations of the image clustering method described in the above embodiments.

A computer program product or a computer program is further provided according to an embodiment of the present disclosure. The computer program product or the computer program includes computer program code, the computer program code is stored in a computer-readable storage medium, a processor of a computer device reads the computer program code from the computer-readable storage medium, and the processor executes the computer program code, such that the computer device implements the operations of the image clustering method in the above embodiments. In some embodiments, a computer program involved in the embodiments of the present disclosure may be deployed on a single computer device for executing, or deployed on multiple computer devices at one location for executing, or deployed on multiple computer devices distributed at multiple locations and interconnected through a communication network for executing, where the multiple computer devices distributed at multiple locations and interconnected through a communication network may form a blockchain system.

A person skilled in the art may understand that all or some of the steps of the above embodiments may be implemented by hardware, or may be implemented by a program instructing relevant hardware. The program may be stored in a computer-readable storage medium, and the storage medium may be a read-only memory, a magnetic disk, an optical disc, or the like.

The above descriptions are merely optional embodiments of the embodiments of the present disclosure, but are not intended to limit the present disclosure. The scope of protection is provided by the appended claims.

## Claims

1. An image clustering method, executed by a computer device, the method comprising:
determining a first clustering parameter based on M image groups, the first clustering parameter representing a clustering degree of images in the M image groups, and M being an integer greater than 1;
for any target image group in the M image groups, dividing the target image group into two image groups to obtain M+1 reference image groups, and determining a reference clustering parameter determined based on the M+1 reference image groups as a second clustering parameter for the target image group, the second clustering parameter representing a clustering degree of images in the M+1 reference image groups; and
dividing, in a case that a clustering degree represented by a target second clustering parameter is not lower than the clustering degree represented by the first clustering parameter, a target image group corresponding to the target second clustering parameter into two image groups to obtain M+1 image groups, the target second clustering parameter being the second clustering parameter representing the highest clustering degree among respective second clustering parameters of the M image groups,
wherein before the determining a first clustering parameter based on M image groups, the method further comprises:
obtaining a plurality of images generated by capturing a target object;
calling an image classification model to perform classification processing on each of the plurality of images to obtain a class label of the image; and
classifying images of a same class into a same image group based on the respective class labels of the plurality of images to obtain the M image groups.

2. The method according to claim 1, wherein after the dividing a target image group corresponding to the target second clustering parameter into two image groups to obtain M+1 image groups, the method further comprises:
for any target image group in the M+1 image groups, dividing the target image group into two image groups to obtain M+2 reference image groups, and determining a reference clustering parameter determined based on the M+2 reference image groups as a third clustering parameter for the target image group, the third clustering parameter representing a clustering degree of images in the M+2 reference image groups;
dividing, in a case that a clustering degree represented by a target third clustering parameter is not lower than the clustering degree represented by the target second clustering parameter, a target image group corresponding to the target third clustering parameter into two image groups to obtain M+2 image groups, the target third clustering parameter being the third clustering parameter representing the highest clustering degree among respective third clustering parameters of the M+1 image groups; and
determining that image clustering processing for the image groups is completed, in a case that the clustering degree represented by the target third clustering parameter is lower than the clustering degree represented by the target second clustering parameter,.

3. The method according to claim 1, wherein the image classification model comprises a first feature extraction network and an image classification network, and wherein the calling an image classification model to perform classification processing on each of the plurality of images to obtain a class label of the image comprises:
for each image in the plurality of images, calling the first feature extraction network to perform feature extraction on the image to obtain a first image feature; and
calling the image classification network to perform classification processing based on the first image feature to obtain a class label of the image.

4. The method according to claim 3, wherein the determining a first clustering parameter based on M image groups comprises:
for each image in the M image groups, determining an aggregation parameter and a separation parameter corresponding to the image, based on the first image feature of the image, first image features of other images in an image group to which the image belongs, and first image features of images in other image groups, the aggregation parameter representing a degree of dissimilarity between the image and other images in the image group to which the image belongs, and the separation parameter representing a degree of dissimilarity between the image and images in the other image groups;
determining, based on the aggregation parameter and the separation parameter, a clustering sub-parameter corresponding to the image, the clustering sub-parameter being negatively correlated with the aggregation parameter, and the clustering sub-parameter being positively correlated with the separation parameter; and
determining the first clustering parameter based on the clustering sub-parameter corresponding to each of the images in the M image groups.

5. The method according to claim 3, wherein the images are pathology slide images, the first feature extraction network comprises K feature extraction layers and a feature conversion layer, and the calling the first feature extraction network to perform feature extraction on the image to obtain a first image feature comprises:
calling the K feature extraction layers to sequentially perform feature extraction on the image to obtain an image feature outputted by each of the K feature extraction layer; and
calling the feature conversion layer to perform feature conversion on the image features outputted by last L feature extraction layers to obtain the first image feature, L being an integer greater than 1 and not greater than the K.

6. The method according to claim 1, wherein a training process for the image classification model comprises:
obtaining sample images;
performing perturbation processing on the sample images respectively by using different approaches to obtain a plurality of perturbed images;
calling an image classification model to be trained to separately perform classification processing on each of the plurality of perturbed image to obtain a class label of the perturbed image; and
training the image classification model based on the class label of the perturbed image.

7. The method according to claim 6, wherein the number of sample images is more than one, the class labels of the perturbed images comprise probabilities that the perturbed images belong to each class, and the training the image classification model based on the class label of the perturbed image comprises:
obtaining a plurality of perturbed images generated by performing perturbation processing on a same sample image, and determining a first difference parameter between probabilities that the plurality of perturbed images belong to a same class;
obtaining a plurality of perturbed images generated by performing perturbation processing on different sample images, and determining a second difference parameter between probabilities that the plurality of perturbed images belong to a same class; and
training the image classification model based on the first difference parameter and the second difference parameter, such that the first difference parameter obtained by calling the trained image classification model decreases and the second difference parameter obtained by calling the trained image classification model increases.

8. The method according to claim 6, wherein the image classification model comprises a first feature extraction network and an image classification network, and the calling an image classification model to be trained to separately perform classification processing on each perturbed image to obtain a class label of the perturbed image comprises:
for each perturbed image, calling the first feature extraction network to perform feature extraction on the perturbed image to obtain a second image feature; and
calling the image classification network to perform classification processing based on the second image feature to obtain a class label of the perturbed image.

9. The method according to claim 8, wherein the image classification model further comprises a second feature extraction network, and the method further comprises:
calling the second feature extraction network to perform feature extraction on the second image feature to obtain a third image feature; and
training the image classification model based on the third image feature of each perturbed image.

10. The method according to claim 9, wherein the number of sample images is more than one, and the training the image classification model based on the third image feature of each perturbed image comprises:
obtaining a plurality of perturbed images generated by performing perturbation processing on a same sample image, and determining a third difference parameter between third image features of the obtained plurality of disturbed images;
obtaining a plurality of perturbed images generated by performing perturbation processing on different sample images, and determining a fourth difference parameter between third image features of the obtained plurality of perturbed images; and
training the image classification model based on the third difference parameter and the fourth difference parameter, such that the third difference parameter obtained by calling the trained image classification model decreases and the fourth difference parameter obtained by calling the trained image classification model increases.

11. An image clustering apparatus, the apparatus comprising:
a first parameter determining module, configured to determine a first clustering parameter based on M image groups, the first clustering parameter representing a clustering degree of images in the M image groups, and M being an integer greater than 1;
a second parameter determining module, configured to, for any target image group in the M image groups, divide the target image group into two image groups to obtain M+1 reference image groups, and determine a reference clustering parameter determined based on the M+1 reference image groups as a second clustering parameter for the target image group, the second clustering parameter representing a clustering degree of images in the M+1 reference image groups; and
an image group dividing module, configured to divide, in a case that a clustering degree represented by a target second clustering parameter is not lower than the clustering degree represented by the first clustering parameter, a target image group corresponding to the target second clustering parameter into two image groups to obtain M+1 image groups, the target second clustering parameter being the second clustering parameter representing the highest clustering degree among respective second clustering parameters of the M image groups,
wherein before the determining a first clustering parameter based on M image groups, the apparatus further configured to:
obtain a plurality of images generated by capturing a target object;
call the image classification model to perform classification processing on each of the plurality of images to obtain a class label of the image; and
classify images of a same class into a same image group based on the respective class labels of the plurality of images to obtain the M image groups.

12. The apparatus according to claim 11, wherein the second parameter determining module is further configured to:
for any target image group in the M+1 image groups, divide the target image group into two image groups to obtain M+2 reference image groups, and determine a reference clustering parameter determined based on the M+2 reference image groups as a third clustering parameter for the target image group, the third clustering parameter representing a clustering degree of images in the M+2 reference image groups; and
the image group dividing module is further configured to divide, in a case that a clustering degree represented by a target third clustering parameter is not lower than the clustering degree represented by the target second clustering parameter, a target image group corresponding to the target third clustering parameter into two image groups to obtain M+2 image groups, the target third clustering parameter being the third clustering parameter representing the highest clustering degree among respective third clustering parameters of the M+1 image groups; and determine that image clustering processing for the image groups is completed, in a case that the clustering degree represented by the target third clustering parameter is lower than the clustering degree represented by the target second clustering parameter,.

13. A computer device comprising a processor and a memory, wherein the memory stores at least one computer program, and the at least one computer program is loaded and executed by the processor to implement operations of the image clustering method according to any one of claims 1 to 10.

14. A computer-readable storage medium, wherein at least one computer program is stored in the computer-readable storage medium, and the at least one computer program is loaded and executed by a processor to implement operations of in the image clustering method according to any one of claims 1 to 10.

## Patentansprüche

1. Bildclusteringverfahren, ausgeführt durch eine Computervorrichtung, wobei das Verfahren umfasst:
Bestimmen eines ersten Clustering-Parameters basierend auf M Bildgruppen, wobei der erste Clustering-Parameter einen Clustering-Grad von Bildern in den M Bildgruppen repräsentiert und M eine ganze Zahl größer als 1 ist;
für jede beliebige Ziel-Bildgruppe in den M Bildgruppen, Aufteilen der Ziel-Bildgruppe in zwei Bildgruppen, um M+1 Referenz-Bildgruppen zu erhalten, und Bestimmen eines Referenz-Clustering-Parameters, der basierend auf den M+1 Referenz-Bildgruppen bestimmt wird, als einen zweiten Clustering-Parameter für die Ziel-Bildgruppe, wobei der zweite Clustering-Parameter einen Clustering-Grad von Bildern in den M+1 Referenz-Bildgruppen repräsentiert; und
Aufteilen, in einem Fall, dass ein Clustering-Grad, der durch einen zweiten Ziel-Clustering-Parameter repräsentiert wird, nicht niedriger ist als der Clustering-Grad, der durch den ersten Clustering-Parameter repräsentiert wird, einer Ziel-Bildgruppe, die dem zweiten Ziel-Clustering-Parameter entspricht, in zwei Bildgruppen, um M+1 Bildgruppen zu erhalten, wobei der zweite Ziel-Clustering-Parameter der zweite Clustering-Parameter ist, der den höchsten Clustering-Grad unter jeweiligen zweiten Clustering-Parametern der M Bildgruppen repräsentiert,
wobei vor dem Bestimmen eines ersten Clustering-Parameters basierend auf M Bildgruppen das Verfahren ferner umfasst:
Erhalten einer Mehrzahl von Bildern, die durch Erfassen eines Zielobjekts erzeugt werden;
Aufrufen eines Bildklassifizierungsmodells, um eine Klassifizierungsverarbeitung an jedem der Mehrzahl von Bildern durchzuführen, um eine Klassenbezeichnung des Bildes zu erhalten; und
Klassifizieren von Bildern einer gleichen Klasse in eine gleiche Bildgruppe basierend auf den jeweiligen Klassenbezeichnungen der Mehrzahl von Bildern, um die M Bildgruppen zu erhalten.

2. Verfahren nach Anspruch 1, wobei nach dem Aufteilen einer Ziel-Bildgruppe, die dem zweiten Ziel-Clustering-Parameter entspricht, in zwei Bildgruppen, um M+1 Bildgruppen zu erhalten, das Verfahren ferner umfasst:
für jede beliebige Ziel-Bildgruppe in den M+1 Bildgruppen, Aufteilen der Ziel-Bildgruppe in zwei Bildgruppen, um M+2 Referenz-Bildgruppen zu erhalten, und Bestimmen eines Referenz-Clustering-Parameters, der basierend auf den M+2 Referenz-Bildgruppen bestimmt wird, als einen dritten Clustering-Parameter für die Ziel-Bildgruppe, wobei der dritte Clustering-Parameter einen Clustering-Grad von Bildern in den M+2 Referenz-Bildgruppen repräsentiert;
Aufteilen, in einem Fall, dass ein Clustering-Grad, der durch einen dritten Ziel-Clustering-Parameter repräsentiert wird, nicht niedriger ist als der Clustering-Grad, der durch den zweiten Ziel-Clustering-Parameter repräsentiert wird, einer Ziel-Bildgruppe, die dem dritten Ziel-Clustering-Parameter entspricht, in zwei Bildgruppen, um M+2 Bildgruppen zu erhalten, wobei der dritte Ziel-Clustering-Parameter der dritte Clustering-Parameter ist, der den höchsten Clustering-Grad unter jeweiligen dritten Clustering-Parametern der M+1 Bildgruppen repräsentiert; und
Bestimmen, dass eine Bildclusteringverarbeitung für die Bildgruppen abgeschlossen ist, in einem Fall, dass der Clustering-Grad, der durch den dritten Ziel-Clustering-Parameter repräsentiert wird, niedriger ist als der Clustering-Grad, der durch den zweiten Ziel-Clustering-Parameter repräsentiert wird.

3. Verfahren nach Anspruch 1, wobei das Bildklassifizierungsmodell ein erstes Merkmalsextraktionsnetzwerk und ein Bildklassifizierungsnetzwerk umfasst, und wobei das Aufrufen eines Bildklassifizierungsmodells, um eine Klassifizierungsverarbeitung an jedem der Mehrzahl von Bildern durchzuführen, um eine Klassenbezeichnung des Bildes zu erhalten, umfasst:
für jedes Bild in der Mehrzahl von Bildern, Aufrufen des ersten Merkmalsextraktionsnetzwerks, um eine Merkmalsextraktion an dem Bild durchzuführen, um ein erstes Bildmerkmal zu erhalten; und
Aufrufen des Bildklassifizierungsnetzwerks, um eine Klassifizierungsverarbeitung basierend auf dem ersten Bildmerkmal durchzuführen, um eine Klassenbezeichnung des Bildes zu erhalten.

4. Verfahren nach Anspruch 3, wobei das Bestimmen eines ersten Clustering-Parameters basierend auf M Bildgruppen umfasst:
für jedes Bild in den M Bildgruppen, Bestimmen eines Aggregationsparameters und eines Separationsparameters, die dem Bild entsprechen, basierend auf dem ersten Bildmerkmal des Bildes, ersten Bildmerkmalen anderer Bilder in einer Bildgruppe, zu der das Bild gehört, und ersten Bildmerkmalen von Bildern in anderen Bildgruppen, wobei der Aggregationsparameter einen Unähnlichkeitsgrad zwischen dem Bild und anderen Bildern in der Bildgruppe, zu der das Bild gehört, repräsentiert und der Separationsparameter einen Unähnlichkeitsgrad zwischen dem Bild und Bildern in den anderen Bildgruppen repräsentiert;
Bestimmen, basierend auf dem Aggregationsparameter und dem Separationsparameter, eines Clustering-Teilparameters, der dem Bild entspricht, wobei der Clustering-Teilparameter negativ korreliert mit dem Aggregationsparameter ist und der Clustering-Teilparameter positiv korreliert mit dem Separationsparameter ist; und
Bestimmen des ersten Clustering-Parameters basierend auf dem Clustering-Teilparameter, der jedem der Bilder in den M Bildgruppen entspricht.

5. Verfahren nach Anspruch 3, wobei die Bilder Pathologie-Schnittbilder sind, das erste Merkmalsextraktionsnetzwerk K Merkmalsextraktionsschichten und eine Merkmalskonvertierungsschicht umfasst, und das Aufrufen des ersten Merkmalsextraktionsnetzwerks, um eine Merkmalsextraktion an dem Bild durchzuführen, um ein erstes Bildmerkmal zu erhalten, umfasst:
Aufrufen der K Merkmalsextraktionsschichten, um sequenziell eine Merkmalsextraktion an dem Bild durchzuführen, um ein Bildmerkmal zu erhalten, das von jeder der K Merkmalsextraktionsschichten ausgegeben wird; und
Aufrufen der Merkmalskonvertierungsschicht, um eine Merkmalskonvertierung an den Bildmerkmalen durchzuführen, die von den letzten L Merkmalsextraktionsschichten ausgegeben werden, um das erste Bildmerkmal zu erhalten, wobei L eine ganze Zahl größer als 1 und nicht größer als K ist.

6. Verfahren nach Anspruch 1, wobei ein Trainingsprozess für das Bildklassifizierungsmodell umfasst:
Erhalten von Musterbildern;
Durchführen einer Perturbationsverarbeitung an den Musterbildern jeweils unter Verwendung unterschiedlicher Ansätze, um eine Mehrzahl von perturbierten Bildern zu erhalten;
Aufrufen eines zu trainierenden Bildklassifizierungsmodells, um separat eine Klassifizierungsverarbeitung an jedem der Mehrzahl von perturbierten Bildern durchzuführen, um eine Klassenbezeichnung des perturbierten Bildes zu erhalten; und Training des Bildklassifizierungsmodells basierend auf der Klassenbezeichnung des perturbierten Bildes.

7. Verfahren nach Anspruch 6, wobei die Anzahl der Musterbilder mehr als eins ist, die Klassenbezeichnungen der perturbierten Bilder Wahrscheinlichkeiten umfassen, dass die perturbierten Bilder zu jeder Klasse gehören, und das Training des Bildklassifizierungsmodells basierend auf der Klassenbezeichnung des perturbierten Bildes umfasst:
Erhalten einer Mehrzahl von perturbierten Bildern, die durch Durchführen einer Perturbationsverarbeitung an einem gleichen Musterbild erzeugt werden, und Bestimmen eines ersten Differenzparameters zwischen Wahrscheinlichkeiten, dass die Mehrzahl von perturbierten Bildern zu einer gleichen Klasse gehört;
Erhalten einer Mehrzahl von perturbierten Bildern, die durch Durchführen einer Perturbationsverarbeitung an unterschiedlichen Musterbildern erzeugt werden, und Bestimmen eines zweiten Differenzparameters zwischen Wahrscheinlichkeiten, dass die Mehrzahl von perturbierten Bildern zu einer gleichen Klasse gehört; und
Training des Bildklassifizierungsmodells basierend auf dem ersten Differenzparameter und dem zweiten Differenzparameter, sodass der erste Differenzparameter, der durch Aufrufen des trainierten Bildklassifizierungsmodells erhalten wird, abnimmt und der zweite Differenzparameter, der durch Aufrufen des trainierten Bildklassifizierungsmodells erhalten wird, zunimmt.

8. Verfahren nach Anspruch 6, wobei das Bildklassifizierungsmodell ein erstes Merkmalsextraktionsnetzwerk und ein Bildklassifizierungsnetzwerk umfasst und das Aufrufen eines zu trainierenden Bildklassifizierungsmodells, um separat eine Klassifizierungsverarbeitung an jedem perturbierten Bild durchzuführen, um eine Klassenbezeichnung des perturbierten Bildes zu erhalten, umfasst:
für jedes perturbierte Bild, Aufrufen des ersten Merkmalsextraktionsnetzwerks, um eine Merkmalsextraktion an dem perturbierten Bild durchzuführen, um ein zweites Bildmerkmal zu erhalten; und
Aufrufen des Bildklassifizierungsnetzwerks, um eine Klassifizierungsverarbeitung basierend auf dem zweiten Bildmerkmal durchzuführen, um eine Klassenbezeichnung des perturbierten Bildes zu erhalten.

9. Verfahren nach Anspruch 8, wobei das Bildklassifizierungsmodell ferner ein zweites Merkmalsextraktionsnetzwerk umfasst und das Verfahren ferner umfasst:
Aufrufen des zweiten Merkmalsextraktionsnetzwerks, um eine Merkmalsextraktion an dem zweiten Bildmerkmal durchzuführen, um ein drittes Bildmerkmal zu erhalten; und
Training des Bildklassifizierungsmodells basierend auf dem dritten Bildmerkmal jedes perturbierten Bildes.

10. Verfahren nach Anspruch 9, wobei die Anzahl der Musterbilder mehr als eins ist und das Training des Bildklassifizierungsmodells basierend auf dem dritten Bildmerkmal jedes perturbierten Bildes umfasst:
Erhalten einer Mehrzahl von perturbierten Bildern, die durch Durchführen einer Perturbationsverarbeitung an einem gleichen Musterbild erzeugt werden, und Bestimmen eines dritten Differenzparameters zwischen dritten Bildmerkmalen der erhaltenen Mehrzahl von gestörten Bildern;
Erhalten einer Mehrzahl von perturbierten Bildern, die durch Durchführen einer Perturbationsverarbeitung an unterschiedlichen Musterbildern erzeugt werden, und Bestimmen eines vierten Differenzparameters zwischen dritten Bildmerkmalen der erhaltenen Mehrzahl von perturbierten Bildern; und
Training des Bildklassifizierungsmodells basierend auf dem dritten Differenzparameter und dem vierten Differenzparameter, sodass der dritte Differenzparameter, der durch Aufrufen des trainierten Bildklassifizierungsmodells erhalten wird, abnimmt und der vierte Differenzparameter, der durch Aufrufen des trainierten Bildklassifizierungsmodells erhalten wird, zunimmt.

11. Bildclusteringvorrichtung, wobei die Vorrichtung umfasst:
ein erstes Parameterbestimmungsmodul, das konfiguriert ist, einen ersten Clustering-Parameter basierend auf M Bildgruppen zu bestimmen, wobei der erste Clustering-Parameter einen Clustering-Grad von Bildern in den M Bildgruppen repräsentiert und M eine ganze Zahl größer als 1 ist;
ein zweites Parameterbestimmungsmodul, das konfiguriert ist, für jede beliebige Ziel-Bildgruppe in den M Bildgruppen die Ziel-Bildgruppe in zwei Bildgruppen aufzuteilen, um M+1 Referenz-Bildgruppen zu erhalten, und einen Referenz-Clustering-Parameter, der basierend auf den M+1 Referenz-Bildgruppen bestimmt wird, als einen zweiten Clustering-Parameter für die Ziel-Bildgruppe zu bestimmen, wobei der zweite Clustering-Parameter einen Clustering-Grad von Bildern in den M+1 Referenz-Bildgruppen repräsentiert; und
ein Bildgruppenaufteilungsmodul, das konfiguriert ist, in einem Fall, dass ein Clustering-Grad, der durch einen zweiten Ziel-Clustering-Parameter repräsentiert wird, nicht niedriger ist als der Clustering-Grad, der durch den ersten Clustering-Parameter repräsentiert wird, eine Ziel-Bildgruppe, die dem zweiten Ziel-Clustering-Parameter entspricht, in zwei Bildgruppen aufzuteilen, um M+1 Bildgruppen zu erhalten, wobei der zweite Ziel-Clustering-Parameter der zweite Clustering-Parameter ist, der den höchsten Clustering-Grad unter jeweiligen zweiten Clustering-Parametern der M Bildgruppen repräsentiert,
wobei vor dem Bestimmen eines ersten Clustering-Parameters basierend auf M Bildgruppen die Vorrichtung ferner konfiguriert ist zum:
Erhalten einer Mehrzahl von Bildern, die durch Erfassen eines Zielobjekts erzeugt werden;
Aufrufen des Bildklassifizierungsmodells, um eine Klassifizierungsverarbeitung an jedem der Mehrzahl von Bildern durchzuführen, um eine Klassenbezeichnung des Bildes zu erhalten; und
Klassifizieren von Bildern einer gleichen Klasse in eine gleiche Bildgruppe basierend auf den jeweiligen Klassenbezeichnungen der Mehrzahl von Bildern, um die M Bildgruppen zu erhalten.

12. Vorrichtung nach Anspruch 11, wobei das zweite Parameterbestimmungsmodul ferner konfiguriert ist zum:
für jede beliebige Ziel-Bildgruppe in den M+1 Bildgruppen, Aufteilen der Ziel-Bildgruppe in zwei Bildgruppen, um M+2 Referenz-Bildgruppen zu erhalten, und Bestimmen eines Referenz-Clustering-Parameters, der basierend auf den M+2 Referenz-Bildgruppen bestimmt wird, als einen dritten Clustering-Parameter für die Ziel-Bildgruppe, wobei der dritte Clustering-Parameter einen Clustering-Grad von Bildern in den M+2 Referenz-Bildgruppen repräsentiert; und
das Bildgruppenaufteilungsmodul ferner konfiguriert ist zum Aufteilen, in einem Fall, dass ein Clustering-Grad, der durch einen dritten Ziel-Clustering-Parameter repräsentiert wird, nicht niedriger ist als der Clustering-Grad, der durch den zweiten Ziel-Clustering-Parameter repräsentiert wird, einer Ziel-Bildgruppe, die dem dritten Ziel-Clustering-Parameter entspricht, in zwei Bildgruppen, um M+2 Bildgruppen zu erhalten, wobei der dritte Ziel-Clustering-Parameter der dritte Clustering-Parameter ist, der den höchsten Clustering-Grad unter jeweiligen dritten Clustering-Parametern der M+1 Bildgruppen repräsentiert; und Bestimmen, dass eine Bildclusteringverarbeitung für die Bildgruppen abgeschlossen ist, in einem Fall, dass der Clustering-Grad, der durch den dritten Ziel-Clustering-Parameter repräsentiert wird, niedriger ist als der Clustering-Grad, der durch den zweiten Ziel-Clustering-Parameter repräsentiert wird.

13. Computervorrichtung, umfassend einen Prozessor und einen Speicher, wobei der Speicher mindestens ein Computerprogramm speichert und das mindestens eine Computerprogramm durch den Prozessor geladen und ausgeführt wird, um Operationen des Bildclusteringverfahrens nach einem der Ansprüche 1 bis 10 zu implementieren.

14. Computerlesbares Speichermedium, wobei mindestens ein Computerprogramm in dem computerlesbaren Speichermedium gespeichert ist und das mindestens eine Computerprogramm durch einen Prozessor geladen und ausgeführt wird, um Operationen des Bildclusteringverfahrens nach einem der Ansprüche 1 bis 10 zu implementieren.

## Revendications

1. Procédé de regroupement d'images, exécuté par un dispositif informatique, le procédé comprenant : déterminer un premier paramètre de regroupement sur la base de M groupes d'images, le premier paramètre de regroupement représentant un degré de regroupement d'images dans les M groupes d'images, et M étant un entier supérieur à 1 ; pour tout groupe d'images cible parmi les M groupes d'images, diviser le groupe d'images cible en deux groupes d'images pour obtenir M+1 groupes d'images de référence, et déterminer un paramètre de regroupement de référence déterminé sur la base des M+1 groupes d'images de référence en tant que deuxième paramètre de regroupement pour le groupe d'images cible, le deuxième paramètre de regroupement représentant un degré de regroupement d'images dans les M+1 groupes d'images de référence ; et diviser, dans le cas où un degré de regroupement représenté par un deuxième paramètre de regroupement cible n'est pas inférieur au degré de regroupement représenté par le premier paramètre de regroupement, un groupe d'images cible correspondant au deuxième paramètre de regroupement cible en deux groupes d'images pour obtenir M+1 groupes d'images, le deuxième paramètre de regroupement cible étant le deuxième paramètre de regroupement représentant le degré de regroupement le plus élevé parmi les deuxièmes paramètres de regroupement respectifs des M groupes d'images, dans lequel avant l'étape de déterminer un premier paramètre de regroupement sur la base de M groupes d'images, le procédé comprend en outre : obtenir une pluralité d'images générées par capture d'un objet cible ; appeler un modèle de classification d'images pour effectuer un traitement de classification sur chacune de la pluralité d'images pour obtenir une étiquette de classe de l'image ; et classer des images d'une même classe dans un même groupe d'images sur la base des étiquettes de classe respectives de la pluralité d'images pour obtenir les M groupes d'images.

2. Procédé selon la revendication 1, dans lequel après l'étape de diviser un groupe d'images cible correspondant au deuxième paramètre de regroupement cible en deux groupes d'images pour obtenir M+1 groupes d'images, le procédé comprend en outre : pour tout groupe d'images cible parmi les M+1 groupes d'images, diviser le groupe d'images cible en deux groupes d'images pour obtenir M+2 groupes d'images de référence, et déterminer un paramètre de regroupement de référence déterminé sur la base des M+2 groupes d'images de référence en tant que troisième paramètre de regroupement pour le groupe d'images cible, le troisième paramètre de regroupement représentant un degré de regroupement d'images dans les M+2 groupes d'images de référence ; diviser, dans le cas où un degré de regroupement représenté par un troisième paramètre de regroupement cible n'est pas inférieur au degré de regroupement représenté par le deuxième paramètre de regroupement cible, un groupe d'images cible correspondant au troisième paramètre de regroupement cible en deux groupes d'images pour obtenir M+2 groupes d'images, le troisième paramètre de regroupement cible étant le troisième paramètre de regroupement représentant le degré de regroupement le plus élevé parmi les troisièmes paramètres de regroupement respectifs des M+1 groupes d'images ; et déterminer que le traitement de regroupement d'images pour les groupes d'images est terminé, dans le cas où le degré de regroupement représenté par le troisième paramètre de regroupement cible est inférieur au degré de regroupement représenté par le deuxième paramètre de regroupement cible,.

3. Procédé selon la revendication 1, dans lequel le modèle de classification d'images comprend un premier réseau d'extraction de caractéristiques et un réseau de classification d'images, et dans lequel l'étape d'appeler un modèle de classification d'images pour effectuer un traitement de classification sur chacune de la pluralité d'images pour obtenir une étiquette de classe de l'image comprend : pour chaque image de la pluralité d'images, appeler le premier réseau d'extraction de caractéristiques pour effectuer une extraction de caractéristiques sur l'image pour obtenir une première caractéristique d'image ; et appeler le réseau de classification d'images pour effectuer un traitement de classification sur la base de la première caractéristique d'image pour obtenir une étiquette de classe de l'image.

4. Procédé selon la revendication 3, dans lequel l'étape de déterminer un premier paramètre de regroupement sur la base de M groupes d'images comprend : pour chaque image dans les M groupes d'images, déterminer un paramètre d'agrégation et un paramètre de séparation correspondant à l'image, sur la base de la première caractéristique d'image de l'image, de premières caractéristiques d'image d'autres images dans un groupe d'images auquel l'image appartient, et de premières caractéristiques d'image d'images dans d'autres groupes d'images, le paramètre d'agrégation représentant un degré de dissimilarité entre l'image et d'autres images dans le groupe d'images auquel l'image appartient, et le paramètre de séparation représentant un degré de dissimilarité entre l'image et des images dans les autres groupes d'images ; déterminer, sur la base du paramètre d'agrégation et du paramètre de séparation, un sous-paramètre de regroupement correspondant à l'image, le sous-paramètre de regroupement étant corrélé négativement avec le paramètre d'agrégation, et le sous-paramètre de regroupement étant corrélé positivement avec le paramètre de séparation ; et déterminer le premier paramètre de regroupement sur la base du sous-paramètre de regroupement correspondant à chacune des images dans les M groupes d'images.

5. Procédé selon la revendication 3, dans lequel les images sont des images de lame de pathologie, le premier réseau d'extraction de caractéristiques comprend K couches d'extraction de caractéristiques et une couche de conversion de caractéristiques, et l'étape d'appeler le premier réseau d'extraction de caractéristiques pour effectuer une extraction de caractéristiques sur l'image pour obtenir une première caractéristique d'image comprend : appeler les K couches d'extraction de caractéristiques pour effectuer séquentiellement une extraction de caractéristiques sur l'image pour obtenir une caractéristique d'image produite par chacune des K couches d'extraction de caractéristiques ; et appeler la couche de conversion de caractéristiques pour effectuer une conversion de caractéristiques sur les caractéristiques d'image produites par les L dernières couches d'extraction de caractéristiques pour obtenir la première caractéristique d'image, L étant un entier supérieur à 1 et non supérieur à K.

6. Procédé selon la revendication 1, dans lequel un processus d'entraînement pour le modèle de classification d'images comprend : obtenir des images d'échantillon ; effectuer un traitement de perturbation sur les images d'échantillon respectivement en utilisant différentes approches pour obtenir une pluralité d'images perturbées ; appeler un modèle de classification d'images à entraîner pour effectuer séparément un traitement de classification sur chacune de la pluralité d'images perturbées pour obtenir une étiquette de classe de l'image perturbée ; et entraîner le modèle de classification d'images sur la base de l'étiquette de classe de l'image perturbée.

7. Procédé selon la revendication 6, dans lequel le nombre d'images d'échantillon est supérieur à un, les étiquettes de classe des images perturbées comprennent des probabilités que les images perturbées appartiennent à chaque classe, et l'étape d'entraîner le modèle de classification d'images sur la base de l'étiquette de classe de l'image perturbée comprend : obtenir une pluralité d'images perturbées générées en effectuant un traitement de perturbation sur une même image d'échantillon, et déterminer un premier paramètre de différence entre des probabilités que la pluralité d'images perturbées appartiennent à une même classe ; obtenir une pluralité d'images perturbées générées en effectuant un traitement de perturbation sur différentes images d'échantillon, et déterminer un deuxième paramètre de différence entre des probabilités que la pluralité d'images perturbées appartiennent à une même classe ; et entraîner le modèle de classification d'images sur la base du premier paramètre de différence et du deuxième paramètre de différence, de sorte que le premier paramètre de différence obtenu en appelant le modèle de classification d'images entraîné diminue et que le deuxième paramètre de différence obtenu en appelant le modèle de classification d'images entraîné augmente.

8. Procédé selon la revendication 6, dans lequel le modèle de classification d'images comprend un premier réseau d'extraction de caractéristiques et un réseau de classification d'images, et l'étape d'appeler un modèle de classification d'images à entraîner pour effectuer séparément un traitement de classification sur chaque image perturbée pour obtenir une étiquette de classe de l'image perturbée comprend : pour chaque image perturbée, appeler le premier réseau d'extraction de caractéristiques pour effectuer une extraction de caractéristiques sur l'image perturbée pour obtenir une deuxième caractéristique d'image ; et appeler le réseau de classification d'images pour effectuer un traitement de classification sur la base de la deuxième caractéristique d'image pour obtenir une étiquette de classe de l'image perturbée.

9. Procédé selon la revendication 8, dans lequel le modèle de classification d'images comprend en outre un deuxième réseau d'extraction de caractéristiques, et le procédé comprend en outre : appeler le deuxième réseau d'extraction de caractéristiques pour effectuer une extraction de caractéristiques sur la deuxième caractéristique d'image pour obtenir une troisième caractéristique d'image ; et entraîner le modèle de classification d'images sur la base de la troisième caractéristique d'image de chaque image perturbée.

10. Procédé selon la revendication 9, dans lequel le nombre d'images d'échantillon est supérieur à un, et l'étape d'entraîner le modèle de classification d'images sur la base de la troisième caractéristique d'image de chaque image perturbée comprend : obtenir une pluralité d'images perturbées générées en effectuant un traitement de perturbation sur une même image d'échantillon, et déterminer un troisième paramètre de différence entre des troisièmes caractéristiques d'image de la pluralité d'images perturbées obtenue ; obtenir une pluralité d'images perturbées générées en effectuant un traitement de perturbation sur différentes images d'échantillon, et déterminer un quatrième paramètre de différence entre des troisièmes caractéristiques d'image de la pluralité d'images perturbées obtenue ; et entraîner le modèle de classification d'images sur la base du troisième paramètre de différence et du quatrième paramètre de différence, de sorte que le troisième paramètre de différence obtenu en appelant le modèle de classification d'images entraîné diminue et que le quatrième paramètre de différence obtenu en appelant le modèle de classification d'images entraîné augmente.

11. Appareil de regroupement d'images, l'appareil comprenant : un premier module de détermination de paramètre, configuré pour déterminer un premier paramètre de regroupement sur la base de M groupes d'images, le premier paramètre de regroupement représentant un degré de regroupement d'images dans les M groupes d'images, et M étant un entier supérieur à 1 ; un deuxième module de détermination de paramètre, configuré pour, pour tout groupe d'images cible parmi les M groupes d'images, diviser le groupe d'images cible en deux groupes d'images pour obtenir M+1 groupes d'images de référence, et déterminer un paramètre de regroupement de référence déterminé sur la base des M+1 groupes d'images de référence en tant que deuxième paramètre de regroupement pour le groupe d'images cible, le deuxième paramètre de regroupement représentant un degré de regroupement d'images dans les M+1 groupes d'images de référence ; et un module de division de groupes d'images, configuré pour diviser, dans le cas où un degré de regroupement représenté par un deuxième paramètre de regroupement cible n'est pas inférieur au degré de regroupement représenté par le premier paramètre de regroupement, un groupe d'images cible correspondant au deuxième paramètre de regroupement cible en deux groupes d'images pour obtenir M+1 groupes d'images, le deuxième paramètre de regroupement cible étant le deuxième paramètre de regroupement représentant le degré de regroupement le plus élevé parmi les deuxièmes paramètres de regroupement respectifs des M groupes d'images, dans lequel avant l'étape de déterminer un premier paramètre de regroupement sur la base de M groupes d'images, l'appareil est en outre configuré pour : obtenir une pluralité d'images générées par capture d'un objet cible ; appeler le modèle de classification d'images pour effectuer un traitement de classification sur chacune de la pluralité d'images pour obtenir une étiquette de classe de l'image ; et classer des images d'une même classe dans un même groupe d'images sur la base des étiquettes de classe respectives de la pluralité d'images pour obtenir les M groupes d'images.

12. Appareil selon la revendication 11, dans lequel le deuxième module de détermination de paramètre est en outre configuré pour : pour tout groupe d'images cible parmi les M+1 groupes d'images, diviser le groupe d'images cible en deux groupes d'images pour obtenir M+2 groupes d'images de référence, et déterminer un paramètre de regroupement de référence déterminé sur la base des M+2 groupes d'images de référence en tant que troisième paramètre de regroupement pour le groupe d'images cible, le troisième paramètre de regroupement représentant un degré de regroupement d'images dans les M+2 groupes d'images de référence ; et le module de division de groupes d'images est en outre configuré pour diviser, dans le cas où un degré de regroupement représenté par un troisième paramètre de regroupement cible n'est pas inférieur au degré de regroupement représenté par le deuxième paramètre de regroupement cible, un groupe d'images cible correspondant au troisième paramètre de regroupement cible en deux groupes d'images pour obtenir M+2 groupes d'images, le troisième paramètre de regroupement cible étant le troisième paramètre de regroupement représentant le degré de regroupement le plus élevé parmi les troisièmes paramètres de regroupement respectifs des M+1 groupes d'images ; et déterminer que le traitement de regroupement d'images pour les groupes d'images est terminé, dans le cas où le degré de regroupement représenté par le troisième paramètre de regroupement cible est inférieur au degré de regroupement représenté par le deuxième paramètre de regroupement cible,.

13. Dispositif informatique comprenant un processeur et une mémoire, dans lequel la mémoire stocke au moins un programme informatique, et l'au moins un programme informatique est chargé et exécuté par le processeur pour mettre en œuvre des opérations du procédé de regroupement d'images selon l'une quelconque des revendications 1 à 10.

14. Support de stockage lisible par ordinateur, dans lequel au moins un programme informatique est stocké dans le support de stockage lisible par ordinateur, et l'au moins un programme informatique est chargé et exécuté par un processeur pour mettre en œuvre des opérations du procédé de regroupement d'images selon l'une quelconque des revendications 1 à 10.
